# EUROPEAN PATENT SPECIFICATION

(11) **EP 4 320 806 B1**
(45) Date of publication and mention of the grant of the patent: **08.07.2026**
(21) Application number: 22717882.9
(22) Date of filing: 06.04.2022
(51) Int. Cl.: H04L 9/00, H04W 12/108, H04W 12/40, H04L 9/40

(54) **BLOCKCHAIN KEY GENERATION**
BLOCKCHAIN-SCHLÜSSELERZEUGUNG
GÉNÉRATION DE CLÉ DE CHAÎNE DE BLOCS

(30) Priority: 09.04.2021 GB 202105094
(43) Date of publication of application: 14.02.2024
(73) Proprietor: Dabco Limited, Newbury, Berkshire RG14 2FN (GB)
(72) Inventor: POSCHKE, Nils, London Greater London W2 6BY (GB); PALMER, David, London Greater London W2 6BY (GB); PRABDIAL, Yakeen, London Greater London W2 6BY (GB); BENTO, Jorge, London Greater London W2 6BY (GB)
(74) Representative: Boult Wade Tennant LLP
(86) International application number: PCT/GB2022/050857
(87) International publication number: WO 2022/214803

(56) References cited:
- WO-A1-2019/158213
- GB-A- 2 573 394
- GSMA: "Common Implementation Guide to Using the SIM as a 'Root of Trust' to Secure IoT Applications", 3 December 2019 (2019-12-03), XP055693329, Retrieved from the Internet <URL:https://www.gsma.com/iot/wp-content/uploads/2019/12/IoT.04-v1-Common-Implementation-Guide.pdf> [retrieved on 20200508]
- LAM DUC NGUYEN ET AL: "Modeling and Analysis of Data Trading on Blockchain-based Market in IoT Networks", ARXIV.ORG, CORNELL UNIVERSITY LIBRARY, 201 OLIN LIBRARY CORNELL UNIVERSITY ITHACA, NY 14853, 20 December 2020 (2020-12-20), XP081842403

## Description

### Field of the Invention

The present invention relates to a system and method for recording transactions on a distributed ledger and in particular, for a device or object to generate such transactions securely.

### Background of the Invention

There is a common need for different entities to interact and transact with each other to exchange value. However, for this to be done in a safe and secure manner for each party to a transaction, a level of trust is required to exist between transacting entities. In the absence of such trust, other structures and procedures are necessary such as enforceable contracts and third party authorities or intermediaries.

Cryptocurrencies are digital currencies that are a form of alternative currency (or private currency). They are usually distinct from centrally controlled government-issued currencies (for example, fiat money) and offer a decentralised or distributed form of currency and/or medium of exchange. Digital currencies may be transacted or transferred from one owner or entity to another and may be used for any purpose, such as buying goods, purchasing services or even obtaining data. As such, digital currencies represent an alternative to traditional currencies.

One example of a cryptocurrency is bitcoin, although many other cryptocurrency systems have been devised. Bitcoin was developed by Satoshi Nakamoto and the original paper, 'Bitcoin: A Peer-to-Peer Electronic Cash System', outlining the fundamentals of bitcoin technology and principles may be found at https://bitcoin.org/bitcoin.pdf.

Technology underlying distributed cryptocurrencies, such as distributed ledgers, can also be used to record other types of transactions and can form a verifiable history of exchanges or other forms of data without requiring trust to exist between entities. Distributed ledgers, such as blockchains, enable transactions and exchanges of value to occur in the absence of such trust. However, this requires the use of public blockchains to form a consensus that is difficult to corrupt or control by any individual actor or entity. This usually takes the form of a race to consensus based on a proof of work but this itself can consume very high levels of resources in the form of computing and electrical power.

An alternative approach uses private blockchains but this reintroduces the requirement for trust to be developed between parties and the owner and controller of the private blockchain itself.

Trust can be developed by determining and verifying the identity or other characteristics of the entities but this effort can introduce overheads and additional work leading to inefficiencies and extra load for a computer or telecommunications network. Furthermore, such verification or checks often depend on separate sources of information, each of which may also need to be verified and approved or trusted. This may require significant bandwidth and processing resources. Therefore, this approach may only be appropriate for certain entities transacting above a particular value, where the overheads do not become a significant burden. This also prevents new exchanges of value from developing between entities that are new to each other or transient exchanges of low value but at high volume. For small or numerous entities or devices, such as those forming the internet of things or other low computing power devices, the overheads can vastly overwhelm the small exchanges of value. Therefore, this limits the efficiency and scalability necessary for exchanging value or data packages, especially for autonomous or unsupervised devices.

Therefore, there is required a method and system that overcomes these problems.

WO 2019/158213 describes apparatuses, methods, and systems for provisioning a remote unit via a smart contract in a blockchain network. One apparatus (300) includes a processor (305) and a transceiver (325), wherein the processor (305) controls the transceiver (325) to emit (905) a first event in response to receiving a first blockchain message from a first blockchain address and collect (910) a plurality of second blockchain messages. Here, the first event including information about a remote unit (105) and each second blockchain message containing a subscription offer for the remote unit. The transceiver (325) emits (915) a second event in response to receiving a third blockchain message from the first blockchain address. Here, the third blockchain message including user selection of one of the collected subscription offers. The transceiver (325) receives (920) a fourth blockchain message containing provisioning data for the remote unit (105) and emits (925) a third event after successfully validating the fourth blockchain message. Here, the third event comprising the provisioning data for the remote unit.

Common Implementation Guide to Using the SIM as a 'Root of Trust' to Secure loT Applications describes how to leverage existing mobile network operator assets to secure loT services.

### Summary of the Invention

The invention is defined by the appended claims.

Transactions are generated by first defining one or more conditions for those transactions in advance as predefined conditions. In order for the transaction to proceed then these one or more conditions must be satisfied. In some example implementations, some conditions may themselves be conditional on other conditions. For example, if a particular condition is met then either one or more other condition can be disregarded (even if it is not met) or other conditions may instead need to be satisfied for the transaction to proceed. Preferably, these conditions may be defined and stored in the form or smart contracts within a distributed ledger but other techniques may be used to capture and implements such conditions or requirements.

A first device or other entity creates an offer for a digital asset. The digital asset may represent a real asset or server or may instead form the actual asset of value (e.g. data). The device has a UICC (e.g. SIM or eSIM) that contains a processor and memory (preferably both secured or within a secure are of the UICC). The offer is digitally signed by the UICC, preferably within the secure area of the UICC. In an example implementation, the conditions may be set in advance of any offer being generated. The conditions may be set by either or both devices, an external device, server or entity, for example.

Separately, a second device generates a request for the digital asset. This may be before or after the offer for the digital asset has been created. Again, an applet within a UICC of the second device signs the request (or bid). Authentication of both the offer and request takes place. This may be carried out by the second device (authenticating the offer), the first device (authenticating the request) and/or a separate device or server or preferably a node within the distributed ledger. An applet may be hosted on a secure element on the UICC to carry out the various steps including any one or more of generating bids, offers, digitally signing and/or authenticating, for example.

The offer and request are checked against the conditions for the transaction. Again, this may be carried out by any of the above entities but preferably a node within the distributed ledger. If the one, more than one or all of the conditions are met by both offer and request (or particular defined combinations of conditions are met) and the authentication is successful then the transaction may proceed. Otherwise, the system may pause or wait until offers and requests are matched, authenticated and determined to be valid (i.e. meeting the conditions). The conditions may be time-based, entity based (i.e. only certain entities, devices, types or groups of devices can transact with particular types or groups of other entities), location specific or meet other types of requirements, for example.

In the case that both offer and request are found to be valid (and preferably matched to each other as relating to same digital asset or a particular requested type of digital asset) then the transaction can proceed by the first device digitally signing the digital asset by using its UICC. The signed digital asset is transferred from the first device to where it may be used (e.g. at the second device). The digital signature of the digital asset is verified or authenticated. This can be done by a node of the distributed ledger and/or the second device. A transaction is added to the distributed ledger (e.g. as a new block or added to an existing block) preferably following successful receipt of the digital asset. However, in some example implementations other entries may be added to the distributed ledger (e.g. following each or any of the above-mentioned steps being carried out). The transaction records the transfer of the digital asset from the first device to the second device. Optionally, the transaction can represent or be a transfer of value made in exchange for the digital asset.

Because the UICC is issued by a trusted source, such as a telecommunications network provider then it can also be trusted. As the data store on the UICC is secured cryptographically and is tamperproof (even by the device) then this provides additional security, maintaining trust.

In accordance with a first aspect, there is provided a method for generating transactions, the method comprising the steps of: defining one or more conditions for a transaction; adding the one or more conditions to blocks within a distributed ledger; generating by a first device, an offer for a digital asset, wherein the offer is digitally signed by a secure applet executing within a UICC of the first device; generating by a second device, a request for the digital asset, wherein the request is digitally signed by a secure applet executing within a UICC of the second device; authenticating the digital signatures of the offer and of the request; determining that the offer and request meet the one or more conditions added to the distributed ledger; and if the one or more conditions are met by the offer and the request then: digitally signing the digital asset by the secure applet executing within the UICC of the first device; transmitting the signed digital asset from the first device to the second device; authenticating the digital signature of the signed digital asset; and adding to a block on the distributed ledger, a transaction recording the transmission of the digital asset from the first device to the second device. Therefore, entities can transact more safely and securely as conditions can be set in advance and transactions action only proceed if these conditions are met. Furthermore, matches between counterparties can be made more efficiently. Additionally, because the offer, request and digital asset are all signed by a SIM that is itself secure and trusted, then each party can be sure who they are transacting with in the absence of pre-existing trust between them.

Preferably, the step of determining if the one or more conditions are met may be determined by one or more smart contracts stored within the distributed ledger. Other mechanisms determining these conditions may be used. Smart contract implementations enable automated condition determination.

Optionally, the first device, the second device or a separate server may add the block to the distributed ledger recording the transmission of the digital asset from the first device to the second device. This may be orchestrated by a further or different entity, in some cases.

Advantageously, the signed digital asset may transmitted directly from the first device to the second device over a secure channel. Therefore, devices or entities that are unfamiliar with each other can directly transact safely and efficiently without require intermediaries.

Optionally, the method may further comprise the step of recording a transaction of value on the distributed ledger between the second device and the first device in response to the conditions being met. This may be a monetary value, a tokenised value (e.g. a digital currency) or other transaction of value.

Optionally, the method may further comprise the step of the first device authenticating the digitally signed request. Therefore, first device can be sure of who they are transacting with.

Advantageously, the method may further comprise the step of exchanging the digital asset for one or more goods or services. There may be several different example uses for the digital asset. For example, it may be consumed directly (e.g. because it provides information or data) or exchanged as a further step.

Optionally, the method may further comprise using the digital asset to access a service. For example, this may be to gain access to a location (e.g. a car park).

Advantageously, the digital asset may include a package of data. The package of data may include one datum or data for one or more sources, including but not limited to originating on or within the first device.

Advantageously, the package of data may be derived from sensors on, part of or within the first device.

In accordance with a second aspect, there is provided a system comprising: a first device having a UICC, the first device configured to generate an offer for a digital asset and transmit the digital asset, the UICC storing in memory a secure applet containing program instructions to cause a processor to: digitally sign the offer; and digitally sign the digital asset; and a second device having a UICC, the second device configured to generate a request, receive the digital asset transmitted by the first device, and authenticate the digital signature of the digital asset, the UICC storing in memory a secure applet containing program instructions to cause a processor to digitally sign the request; and a distributed ledger having one or more nodes having one or more processors and memory, the memory containing program instructions to cause the one or more processor to: add one or more conditions to one or more blocks within a distributed ledger; authenticate the digital signatures of the offer and of the request; determine that the offer and the request meet the one or more conditions added to the distributed ledger; and allow the digitally signed asset to be transmitted from the first device to the second device when the digitally signed offer and request are determined to meet the one or more conditions. The system may operate in a closed or open network (such as a public telecommunications network or the internet, for example).

Preferably, the UICCs of the first and second devices further comprise one or more secure storage locations configured to store cryptographic material for use in digitally signing. This may be within a secure element within the UICC or SIM. These may be include hardware security or encryption components, for example.

Optionally, the first device may further comprise one or more sensors configured to generate sensor data and further wherein the digital asset is derived from those sensor data. Example, sensors may include any one or more of location, GPS, temperature, accelerometer, gyroscope, light level, sound level, microphone, camera, video, pressure or other sensors.

Optionally, the system may further comprise one or more service providers configured to provide a service (or goods) in return for the digital asset. Therefore, the system may include further hardware or software to accept the digital asset (e.g. a cryptographic token) and provide goods or services in return.

Preferably, the distributed ledger may be further configured to store the conditions as one or more smart contracts. Therefore, the conditions may be automatically checked and the offer and request automatically executed under known or predetermined criteria.

The methods described above may be implemented as a computer program comprising program instructions to operate a computer. The computer program may be stored on a computer-readable medium.

The computer system may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as Java, UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a flowchart of a method for recording transactions on a distributed ledger;
FIG. 1a shows a flowchart of a method for generating transactions on a distributed ledger;
FIG. 2 shows a schematic diagram of a system for recording transaction on a distributed ledger, including a device having a SIM;
FIG. 2a shows a schematic diagram of a system for generating transactions on a distributed ledger, including a first device and a second device both having SIMs;
FIG. 3 shows a schematic diagram indicating high level functionality of the system of figure 2;
FIG. 4 shows a shows a schematic diagram of several architectural components of the system of figure 2;
FIG. 5 shows a schematic diagram of an example implementation of the system of figure 2, including a device and a SIM, proxy server and distributed ledger;
FIG. 6 shows a schematic diagram of a further example implementation of the system of figure 2;
FIG. 7 shows a schematic diagram of a system of devices operating according to the system of figure 5;
FIG. 8 shows a schematic diagram in more detail of the system of devices operating according to the system of figure 5;
FIG. 9 shows a schematic diagram of an example implementation of the system of figure 6;
FIG. 10 shows a schematic diagram of a further example implementation of the system of figure 2, including one or more nodes;
FIG. 11 shows a schematic drawing of a node of figure 10;
FIG. 12 shows a schematic diagram of the method steps carried out by the system of figure 10;
FIG. 13 shows a schematic diagram of an example implementation of the system of figure 2;
FIG. 14 shows a schematic diagram of an example implementation of the SIM of figure 5;
FIG. 15 shows a schematic diagram of an example implementation of the device of figure 5;
FIG. 16 shows a flowchart of a method for managing keys used in the method of figure 1;
FIG. 17 shows a schematic diagram of components used within the example implementation of figure 6;
FIG. 18 shows a schematic diagram of the interaction of components used within the example implementation of figure 6;
FIG. 19 shows a schematic diagram illustrating method steps used to generate keys within the example implementation of figure 6;
FIG. 20 shows a schematic diagram illustrating method steps used to exchange data within the example implementation of figure 6;
FIG. 21 shows a schematic diagram of device architecture within the system of figure 2;
FIG. 22 shows a schematic diagram of architecture middleware used to interact with a secure element within the SIM of figure 2;
FIG. 23 shows a sequence diagram of a procedure for signing transactions according to the method of figure 1;
FIG. 24 shows a schematic diagram of method steps within a procedure for signing transactions using the secure element of the SIM of figure 22;
FIG. 25 shows a schematic diagram of a TLS authentication process that uses PKI and using the SIM of figure 22;
FIG. 26 shows a schematic diagram of an example implementation of the distributed ledger of figure 2;
FIG. 27 shows an example use case that implements the method of figure 1;
FIG. 28 shows a sequence diagram of a portion of a method for matching offers within a data exchange;
FIG. 29 shows a sequence diagram of a portion of the method of figure 28;
FIG. 30 shows a schematic diagram of a messaging system used within the system of figure 2;
FIG. 31 shows a schematic diagram of an example implementation of the system of figure 2;
FIG. 32 shows a sequence diagram of method steps used within the messaging system of figure 30;
FIG. 33 shows a sequence diagram of further method steps used within the messaging system of figure 30;
FIG. 34 shows a sequence diagram of an example implementation of the method of figure 1;
FIG. 35 shows a schematic diagram illustrating method steps for provisioning a device for use with the method of figure 1;
FIG. 36 shows a schematic diagram illustrating method steps for setting up a device for use with the method of figure 1;
FIG. 37 shows a schematic diagram illustrating method steps for setting up a device for use with the method of figure 1;
FIG. 38 shows a schematic diagram illustrating method steps for authenticating a user for use with the device of figures 36 and 37;
FIG. 39 shows a schematic diagram illustrating method steps for authenticating a user for use with the device of figures 36 and 37;
FIG. 40 shows a schematic diagram illustrating method steps of an example implementation of the method of figure 1;
FIG. 41 shows a schematic diagram illustrating further method steps of an example implementation of the method of figure 1;
FIG. 42 shows a schematic diagram illustrating further method steps of an example implementation of the method of figure 1;
FIG. 43 shows a schematic diagram illustrating further method steps of an example implementation of the method of figure 1;
FIG. 44 shows a schematic diagram of an example implementation of the system of figure 2;
FIG. 45 shows a schematic diagram illustrating example architecture components of the system of figure 2;
FIG. 46 shows a schematic diagram illustrating an example implementation of a portion of the system of figure 2;
FIG. 47 shows a schematic diagram illustrating an example implementation of the device within the system of figure 2; and
FIG. 48 shows a schematic diagram illustrating an example implementation of an interface with the system of figure 2.

It should be noted that the figures are illustrated for simplicity and are not necessarily drawn to scale. Like features are provided with the same reference numerals.

### Detailed description of the preferred embodiments

The 'Internet of Things' is growing and transitioning to an 'Economy of Things' (EoT). The number of loT devices is growing and generating large volumes of data. loT devices and smart services interact and interoperate across ownership domains and offers the potential to support data and smart service value transactions automatically in near real time. This can improve interoperability and functionality.

The 'Economy of Things' requires the capability for devices/services to identify, trust each other, and where required automatically transact value directly or using peer-to-peer functionality. There are a range of technologies ranging from Distributed Ledger, Secure Elements, Cryptography and Device Wallets which support Digital ID, Federated Security and transaction applications and services needed for loT, but they are fragmented, have high costs and not sufficiently scalable.

A secure element on a SIM (which may have standardised interfaces and carry out defined operations according to the loT SAFE standard - GSMA) may be used to create one or more multiple sets of asymmetric keys inside a HSM (PKI on SIM) to provide the SIM (and with it the device) with a unique and immutable identity and enable it to interact with a distributed ledger (e.g. block chain) either directly or through a proxy platform or server.

loT SAFE may be used to create a secure channel ((D)TLS) between the device and an loT backend. This uses a secure element on the SIM to hold the asymmetric keys that are needed for the (D)TLS connection.

Two example implementations are described. A proxy server may be used (e.g. Digital Asset Broker, DAB, platform). In this case, the device holding the UICC or SIM uses the key pair to authenticate against the DAB Platform. On that platform there is an orchestration engine that maps the device identity to services. Therefore, with the help of DAB platform, the set of key pairs is interpreted as a Wallet that can be used to interact with different blockchains and may hold several tokens in parallel.

In an alternative example implementation, there may be a direct connection to the blockchain from the device. Even without the DAB Platform as a man in the middle the device can directly interact with the block chain. It can use the Public Key Infrastructure (PKI) on SIM to authenticate itself, sign transactions, etc. as per standard blockchain interaction. This can create a chain of trust from the device directly into the blockchain. The SIM can be seen as an Edge Trusted Device not only supplying all hardware with connectivity but also supplying an identity.

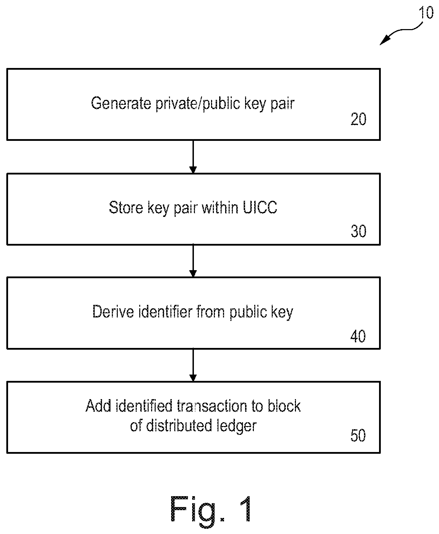

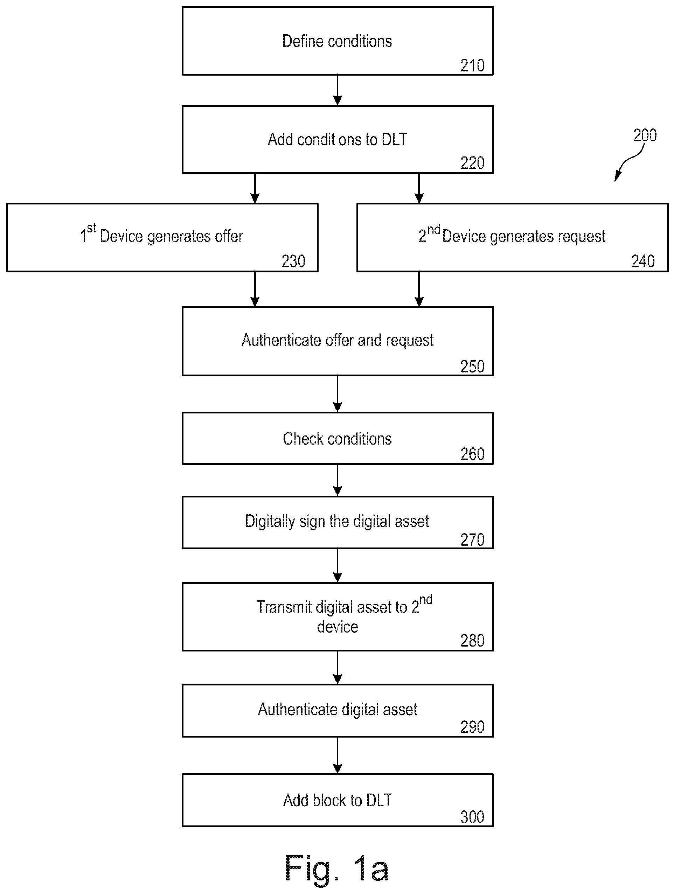

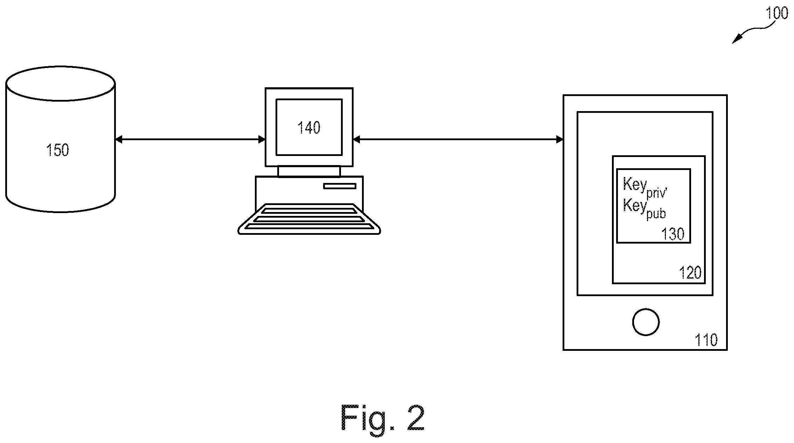

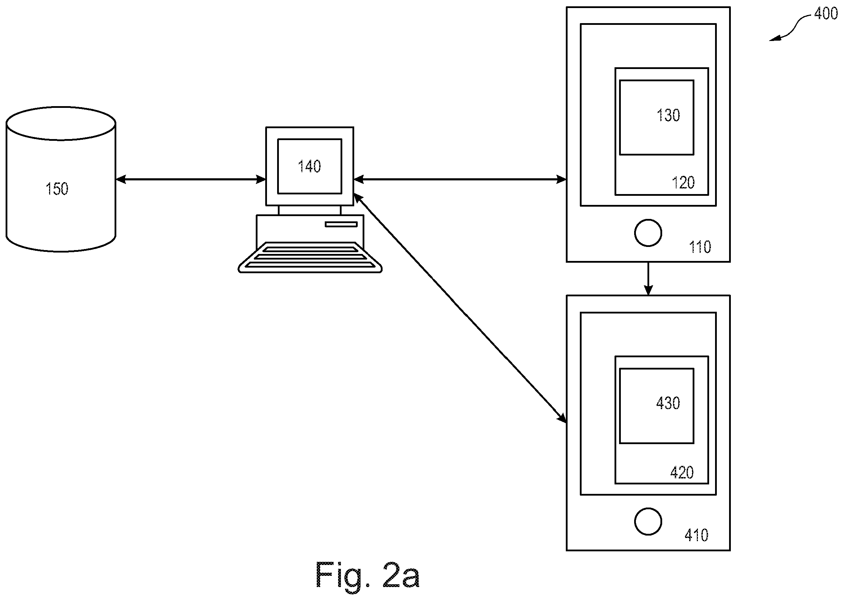

In order to implement such a system and method, various components are used. Figure 1 shows a flow chart of a method 10 for recording transactions in a distributed ledger. Figure 2 shows a schematic and high level diagram of a system 100 for implementing this method. In this example implementation, the distributed ledger is a block chain (generated by suitable components) 150 and the device 110 is a mobile device such as smart phone. However, many different devices may be used. Suitable example blockchain technology is described later on.

At step 20 a public and private key pair is generated. This generation takes place within a UICC 120 (e.g. SIM) within the device 110. The UICC 120 contains storage130 and preferably secure storage that prevents tampering or unauthorised access. Such secure storage is already present in many types of UICCs (including those already deployed within devices). The key pair (or at least the private key of the key) is stored within the UICC 120 at step 30. Therefore, the key pair or at least the private key, can be accessed and used later and at different times.

A transaction identifier is generated at step 40. This identifier is based on or derived from at least the public key of the generated key pair. The transaction identifier is used to identify a transaction that is added to the distributed ledger 150 at step 50. The transaction identifier may represent or incorporate an identifier of the device 110 and/or may be an identifier of the transaction carried out by the device 110. Furthermore, the device identifier may be added to the distributed ledger 150 by submitting a transaction.

The transaction may be added to the distributed ledger 150 directly (i.e. with the device 110 interacting directly with the distributed ledger 150 to add a block on a blockchain) or through an intermediary, server or proxy server 140. This proxy server 140 may be described as a Digital Asset Broker, DAB, or DAB service. In this example implementation, the proxy server 140 adds the transaction to the blockchain with an identifier that identifies the proxy server 140. The proxy server 140 can then hold a data store of transactions that it has added against the identifier based on the public keys of one or more devices (the system may have one or more proxy server 140) but many more devices each associated with one or more proxy servers.

Therefore, the identifier of the transaction on the blockchain may include or be derived from the public key of the stored with the UICC 120 of the device 110 or may be a transaction identifier that is mapped to the identifier derived from the public key. Deriving the identifier may also use a unique identity of the device 110 or user. This may be an IMSI, for example. Other derivation schemes may be used. The use of a proxy server 140 allows simplified processing of the distributed ledger as far fewer identifies are required.

Figure 1a shows a flowchart of a method 200 for generating transactions within a distributed ledger. The system 400 that carries out this method is shown in figure 2a. This system is similar to the system 100 shown in figure 1 with the same or similar components having the same reference numerals.

Conditions for the transactions are defined at step 210. These conditions are added to the distributed ledger 150 (e.g. block chain) at step 220. A first device 110 generates an offer for a digital asset at step 230. This may be at the same time (or before or after) a second device 410 generates a request for the same (or similar) digital asset at step 240. The request may include a range of acceptable or required digital assets, for example. The offer is digitally signed by a secure applet within a SIM 120 of the first device 110. This may occur within a secure area of the SIM 120. The request is also digitally signed by a secure applet within a SIM 420 of the second device 410. This may also occur within a secure area of the SIM 420.

The offer and request are authenticated (e.g. by the distributed ledger 150 or the proxy server 140) at step 250. The conditions are checked by the distributed ledger 150 or the proxy server 140 at step 260 and if met (and the offer and request match with the same digital asset or a digital asset falling with a particular requested range of properties), then the method 200 may proceed. If not then the method may terminate or wait until a match is made and the conditions are met (e.g. by a different combination of offer and request that may be added to the system by different devices or entities). Many different offers and requests may be processed in this way.

When the conditions are met then the first device digitally signs the digital asset at step 270. Again, this is achieved using the secure applet within the SIM 120. The first device 110 then transmits the signed digital asset to the second device 410 at step 280 and as shown as an arrow in figure 2a between the first device 110 and the second device 410.

The digital asset is authenticated at step 290. This may be done by the second device 410 or another entity such as the proxy server 140 or distributed ledger 150. A block is added to the distributed ledger 150 to record the transaction at step 300. The second device 410 may then use or consume the digital asset. For example, it may be surrendered in exchange for goods or services (not shown in this figure). Any one or more additional entries may be made within the distributed ledger 150 recording any one or more of these method steps.

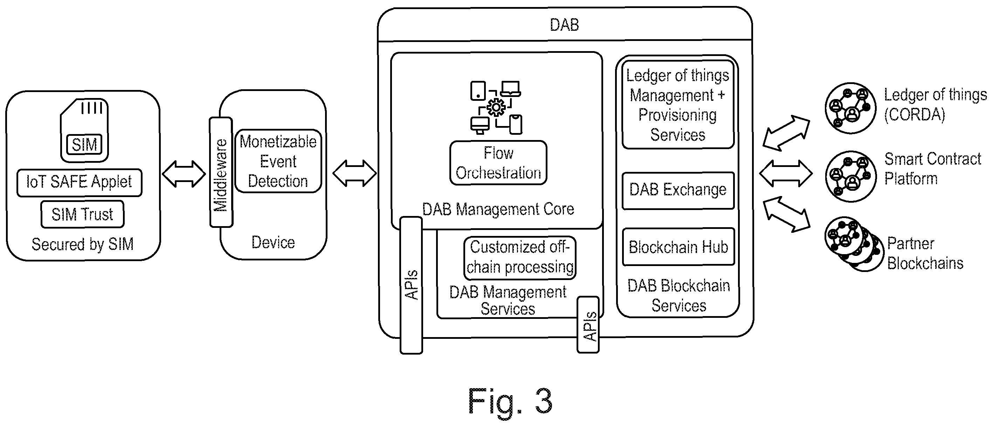

Figure 3 illustrates schematically the high level functionalities of the systems described earlier.

### UICC (SIM)

Role within the system: Provide secure entry point into a chain of trust (SIM as a customer's asset). Throughout this disclosure, the terms SIM and UICC may be used interchangeably as are application and applet.

### Variants:

▪ Secure Element on the SIM, preferably supporting the GSMA loT SAFE Applet; or
▪ Vodafone SIM Trust based on 3GPP Generic Bootstrapping Architecture (GBA).

There are different implementations of the system. In one implementation, a SIM or UICC applet generates one or more cryptographic key pairs. In another implementation, the SIM or UICC may be provisioned with cryptographic material. For example, this may use 3GPP GBA. However, any of the examples or combinations of features and implementations described throughout may be used with either or both implementation.

### Device

Role within the system: Provide integrator into higher layers (Digital Asset Broker, DAB, Management Core) and harmonize communication (also for SIMs from different telecommunications networks or non-SIM devices). The device may take various forms from simple loT devices (e.g. a utility meter) to vehicles, for example.

### Components:

▪ DAB Middleware for IoT SAFE Applet; or
▪ DAB Middleware for SIM Trust;
▪ Sensor Data Extraction for Monetizable Event Detection

### DAB Management Core

Role within the ecosystem: Brokering of interactions within the DAB system to use on-chain and off-chain_functionalities.

### Components:

▪ Flow Orchestration Engine
▪ Common APIs

### DAB Management Services

Role within the ecosystem: Simplifying flow for MVP (MasterCard, VISA, PayPal) and customizing DAB.

### Components:

▪ Customized Off-chain Processing (off-chain)
▪ Customized APIs

### DAB Blockchain Services

Role within the ecosystem: Providing connectors that translate DAB interactions into blockchain language.

### Components:

▪ Ledger of Things
▪ DAB Exchange
▪ Blockchain Hub including Smart Contract Engine

### Architectural Components

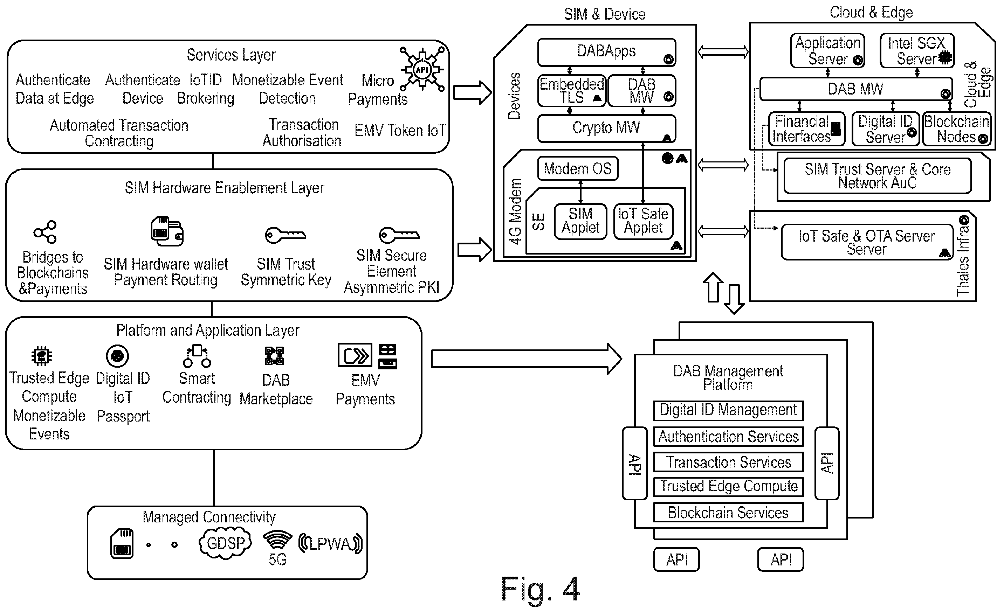

Figure 4 illustrates schematically various architectural components of the system and method.

While the loT SAFE applet implementation provides convenient functionality, the use of GBA provisioning (e.g. Vodafone SIM Trust) enables the use within the system of legacy SIMs that may already be deployed. Therefore, the combination of both implementations (that may work simultaneously or separately within the system) allow as many participants as possible to use the system. Device firmware may be updated over the air for legacy devices and so the GBA implementation (e.g. SIM Trust) may be used without changing the UICC or SIM within a device.

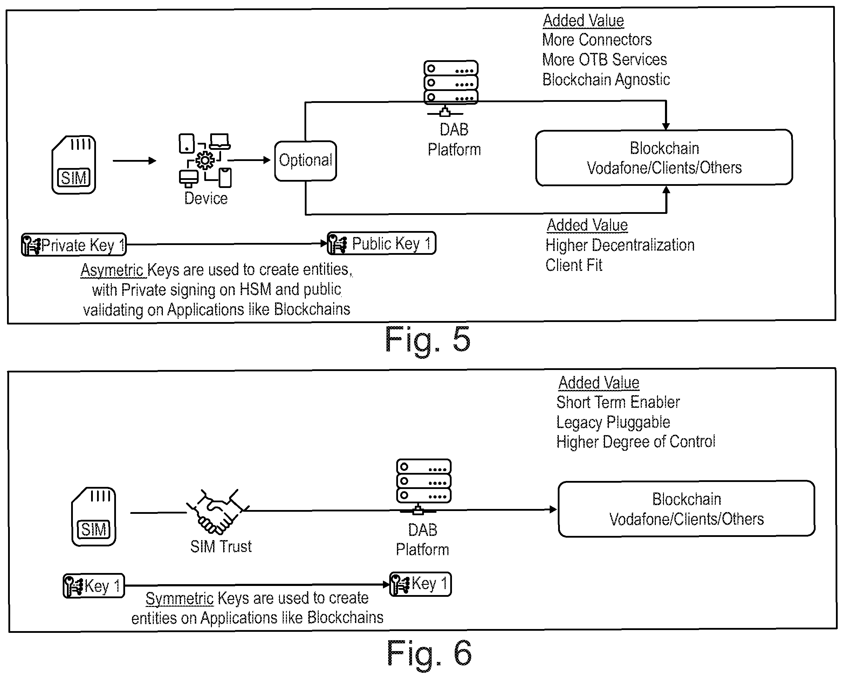

Figures 5 and 6 illustrate at a high level, the use of both implementations with the system 100. The mechanisms are independent but interchangeable and may be suitable for different use cases. As well as providing flexibility for new and legacy SIMs, each implementation option has different advantages. For example, banks & utilities may prefer to interact with the GBA implementation (e.g. SIM Trust) shown in figure 6 because it supports symmetric keys. The SIM applet implementation (e.g. loT SAFE) shown in figure 5 provides improved blockchain interaction because transactions can be signed directly by the UICC or SIM without requiring the need for an intermediate or proxy server 140. Therefore, both mechanisms contemplate each other and satisfy specific technical requirements.

On a high level the main difference between these two mechanisms lies in the cryptographic approach. The loT SAFE Applet uses a secure element on the SIM to store and manage keys predominantly for asymmetric encryption (also known as PKI) with public and private key pairs being generated and stored. In the GBA (e.g. SIM Trust) approach mobile network capabilities are used to establish a symmetric encryption between SIM and an endpoint (e.g. a server such as a DAB server).

Asymmetric encryption or PKI is the technology that is used by many IT infrastructures to secure https and other connections between servers using public/private key pairs.

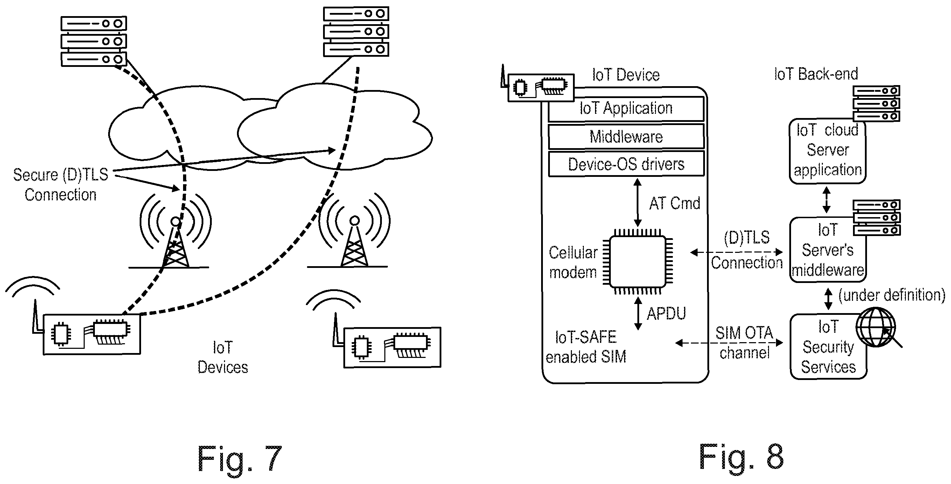

Figures 7 and 8 shows schematically how secure communication channels may be set up between loT devices and servers using the loT Safe Applet running with the SIM 120. Figure 8 shows in more detail how the device initiates the secure connection with the server.

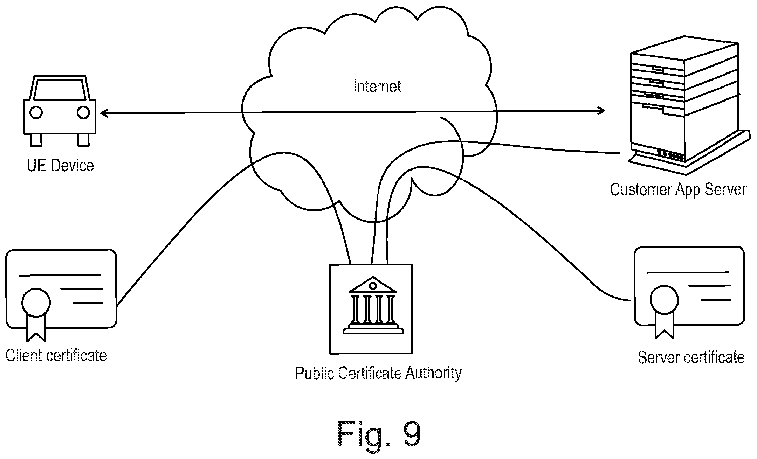

The device is pre-provisioned with a client PKI certificate (e.g. within a UICC or SIM). In the example shown in figure 9, the device is a vehicle but may be any device, mobile or otherwise. The client PKI certificate is preferably a public trust certificate that is procured and signed by a Certificate Authority. The server holds a similar server certificate. When a communication channel is initiated by the client to the server, there is an exchange where both parties authenticate each other using the certificate authority (CA) to confirm the validity of the other party.

The mechanism implemented using the CA makes use of pairs of keys used together, where one encrypts and the second decrypts. The keys can be used with either of them performing the first encryption function while the other key can be used to perform the decryption operation. Because of the asymmetric nature of two different keys performing these functions this is often referred to as "asymmetric" cryptography. One of these keys is public and the other is secret. In a public encryption system, anyone can encrypt a message using a receiver's public key but only the receiver will be able to decrypt the message using his secret key.

Apart from the cryptographic approach, the solution based on loT SAFE delivers some additional features that facilitate further functionalities that may be used with distributed ledger (e.g. blockchain) related environments.

Symmetric encryption algorithms use the same cryptographic keys for both encryption and decryption. The keys, in practice, represent a shared secret between two or more parties that can be used to maintain a private information link. The requirement that both parties have access to the same secret key is one of the main drawbacks of symmetric key encryption, in comparison to asymmetric encryption. In the mobile communication space this solution is facilitated by the device containing a mobile SIM that has a connection to telecommunications network service. Mobile telephony originally had many of the requirements that are present in the loT device space and uses standards based solutions to these problems. These have been developed and scrutinized for a period of more than 20 years and so can be trusted by many entities and organisations.

When a telephony appliance connects to a mobile cellular network, it performs at least two actions including:
▪ Authenticate with and to the mobile network; and
▪ Agree keys that can be used to encrypt communications with the mobile network.

This is typically achieved using the standards based Authentication and Key Agreement (AKA) protocol. The AKA protocol therefore creates trust between a mobile appliance (roaming or otherwise) and a (possibly untrusted) cellular network, such that the two parties can communicate with confidentiality protection.

This alternative technique uses the same AKA protocol, which has been formalized as the Generic Bootstrapping Architecture (GBA), e.g. the Vodafone implementation of SIM Trust, but unlike the conventional cellular use case, the trust is created between the device and an application platform under a user or customer's direct control.

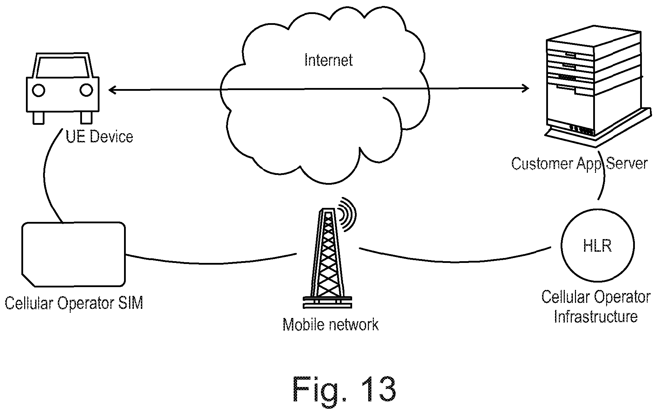

Figure 13 illustrates this GBA implementation. While the UICC or SIM is creating a standard mobile connection to an application server, the AKA protocol is used to create a confidentiality protected communication between the device and a visited Mobile Network. SIM Trust (using the GBA protocol) adds another layer of trust by repeating the AKA flow to create a symmetric encryption between the Device and the App Server. The result is a mutually authenticated secure channel for communications between the two endpoints.

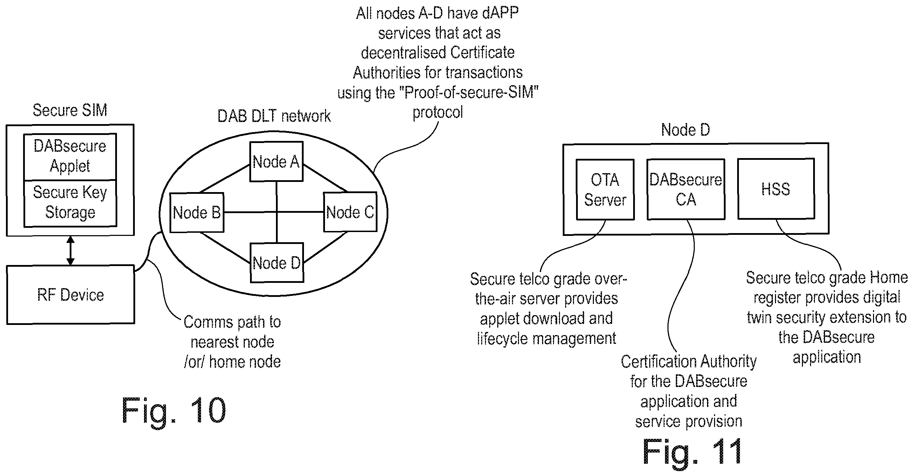

Figure 10 shows an example network arrangement in which individual devices communicate with a node within a distributed ledger network. This network arrangement may be independent of a particular cryptographic scheme (e.g. it may use symmetric or asymmetric encryption). Figure 11 shows schematically the form of these individual nodes. One or more nodes may be present in the network.

In more detail, figures 10 and 11 illustrate the following features. A secure applet (e.g. DLTapplet) on the SIM (within a device) or on the node generates and holds keys securely. These keys may be representation of wallet(s), certificates and/or other modes of digital trust used for the secure exchange of value (using a blockchain). The secure applet may be logically an extension of a home subscriber server's (HSS) hardware secure module (an existing network element deep in the core network of a telecommunications company or operator). The HSS relationship with the secure applet on the SIM may be managed by another existing network element (e.g. an over the air OTA server), which may be a machine used to create a secure communication channel directly with the SIM. The telco node plays the role of a distributed ledger technology DLT notary, acting in governance with a decentralised authority in each of the DAB nodes to create and manage certificates needed to manage a lifecycle of the secure application distribution, update, permissions and decommissioning activities, for example.

The telco node also acts as the CA (certification authority) for services provided by the system (e.g. DLTsecure services). As the HSS's hardened security is extended to the SIM via the DLTsecure services, the DAB DLT uses the SIM and stored keys to create a new consensus protocol ("Proof of Secure SIM"), where the SIM is asked to prove its validity on the system (DAB) upon each transaction, without the need for expensive, high processing proof-of-work/stake type processing across the network. This makes each DAB node lightweight, as well as limits computation requirements for the SIM (as the PUB/PRV keys may be generated asynchronously then offered to the DAB DLT for validation at the point of transaction initiation).

Device owners or other entities may program or define smart contracts or other conditions so that heterogeneous devices from different systems can interact with each other using a common root of trust (i.e. the SIM and secure applet or GBA enabled device). This provides a mechanism and protocol allowing devices to interact and transact. This may be done at scale with multiple devices (and their SIMs) interacting with one or more nodes. This protocol allows for devices to exchange tokens-to-tokens, as well and exchange token-for-data, a use case that has been traditionally resolved using APIs. Furthermore, devices enabled in this way (DAB devices) may autonomously exchange tokens in their one or more wallets for value, ranging from action (e.g. access control) to data streams (e.g. device location of the first or offering device), with secondary "parent" nodes being able to recharge these wallets to manage and track service consumption, for example. This system provides a micropayment and micro billing system as well as a request/transfer/settlement of value exchange that may be coupled with the credit/debit of a decentralised ledger.

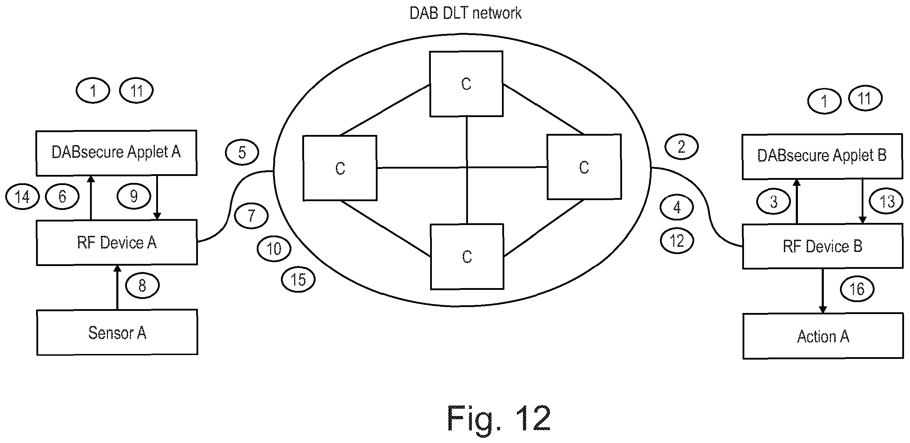

The following describes the steps taken when operating the example network arrangement of figure 10. Again, either encryption scheme (symmetric or asymmetric) may be used. The numbers below correspond with the numbers shown in figure 12 indicating method steps occurring between different components:
0. Background: A & B haves been registered on the DAB NW and have been permissioned to exchange value to each other.
1. Owners of A & B have agreed a smart contract (i.e. "if you give me data X, I will give you Y tokens")
2. B requests data from A based on pre-determined smart contract (C)
3. B's request is signed with DLTsecure B security, and validated by Dapp C (Proof-of-secure-SIM)
4. "Buy" transaction is published on behalf of B on DAB DLT network
5. A downloads applicable requests for transaction determination
6. DLTsecure A verifys request (4)
7. Device A signals to DAB DLT that it wants to "Sell"
8. Device A receives & packages Data A from Sensor A
9. DLTsecure A signs package A
10. A acknowledges exchange on DLT calling upon Smart Contract C to be invoked
11. A sends package A to B (either on or off chain)
12. DLTsecure B updates DLT, DLT records and initiates settlement using Smart Contract C
13. Device B fulfils C
14. Device A confirms token receipt
15. DLT validates C closure
16. Device B analyses package A, makes determination to conduct Action A

The next two sections provide details on how the two implementations operate in more detail.

The UICC applet implementation uses a secure element within the UICC (e.g. SIM). The SIM acts as a hardware wallet protecting cryptographic keys and communications. This implementation enables a SIM to provide a Root of Trust for IoT devices for easy and efficient implementation of key security features. The SIM may securely store transaction signing keys and performing crypto asset transaction signing securely within a secure environment.

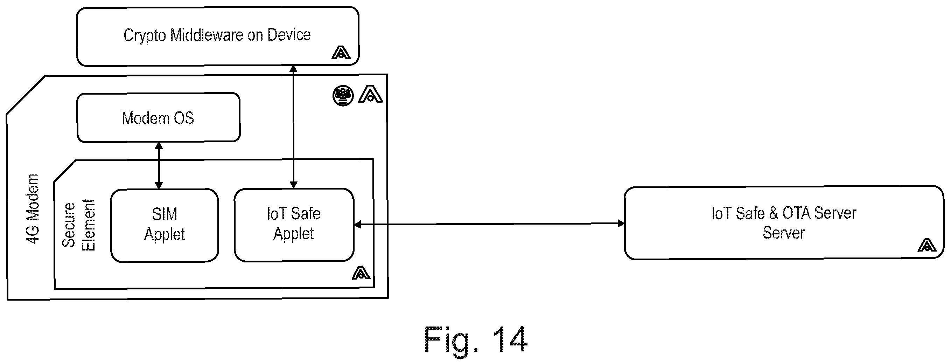

Figure 14 illustrates a schematic diagram of an architectural design of the SIM and an OTA server. SIMs may be provided with a GSMA loT SAFE applet. In addition to holding the SIM Crypto Wallet for transaction signing, this enables mutually authenticated TLS connections that are bound to SIM Hardware Root of Trust as defined in GSMA Specification hits://www.gsma.com/iot/wp-content/uploads/2019/12/IoT.05-v1-IoT-Security-Applet-Interface-Description.pdf.

GSMA IoT SAFE based solutions provide Chip-to-cloud security for loT deployments. Using a hardware secure element, or 'Root of Trust', loT SAFE based solutions provide end-to-end security. The usage of the GSMA standardized secure element and loT SAFE Applet additionally ensures interoperability across different enterprises and consistent use by loT device manufacturers.

For communication between the loT SAFE Applet, which is located on the SIM, and external parties (e.g. a proxy server, blockchains, etc.), Crypto Middleware libraries are also executed within the device but not necessarily within the SIM.

In this implementation, standard authentication mechanisms occur between the SIM and the device as well as between the SIM and an Over-the-Air (OTA) Server. These mechanisms may also involve a secure element on the SIM. This is joined by basic mechanisms to unlock an application and/or the SIM (e.g. by using PIN protection), SIM lock mechanisms, mutual authentication between SIM and device application, etc. Blockchain transactions are validated by blockchain nodes using protocols that include digital signatures sent as part of the transaction.

### Generic Smart SIM Wallet

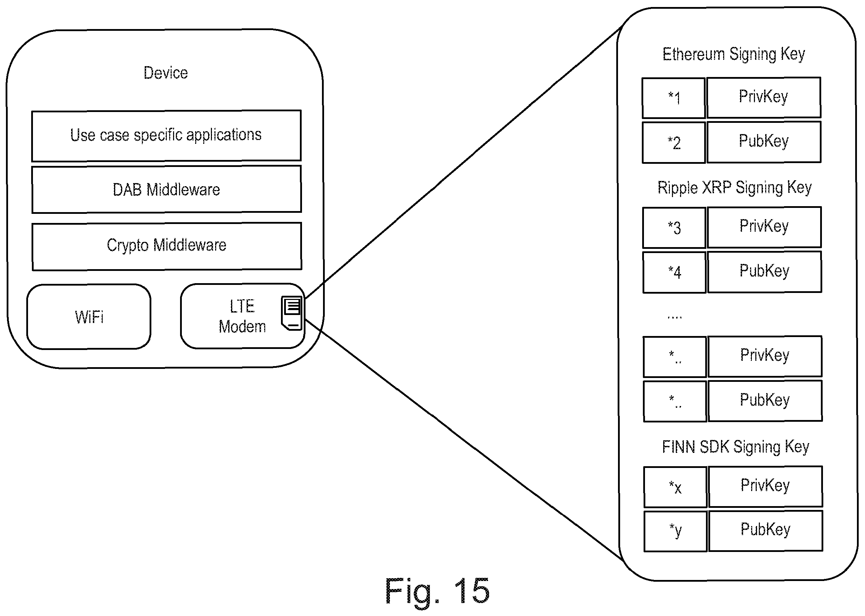

By using the loT SAFE Applet, the SIM provides access to one or more key containers or storage locations within the Secure Element of the SIM. These containers may be used for different use cases or even to providing multiple identities for the same use case or operation. Figure 15 illustrates schematically the storage of multiple identities within the SIM. Each identity may be used as a SIM Wallet that enables a user to authenticate and sign transactions against within different applications. This is not limited to blockchains but may also be used within off-chain mechanisms such as traditional payment rails (e.g. direct communications with other devices or enterprises). Over the air (OTA) update capability of the SIM enables the addition of new containers and key management functions for use in particular implementations.

SIMs can be personalized with additional key containers to sign keys for different blockchain networks. In a preferred implementation, there are three key containers available by default in the SIM. Two containers holding SECP256 K1 ECDSA key pairs and one holding SECP256 R1 ECDSA key pair. However, different key pair types may be used and in any combination.

Considering an end to end solution, a SIM crypto wallet in an loT (or other) device and using SIM as hardware Root of Trust may provide any or all of the following features:
▪ Hardware wallet (signing payment/digital asset transfer transactions)
▪ Verifying signed transactions
▪ Secure communications
▪ Secure storage of sensitive data

The SIM itself thereby could provide any or all of the following capabilities
▪ Additional crypto capabilities
▪ loT device ID metadata storage
▪ Secure Backup / Restore, Key Management
▪ Device initiated bootstrap

Using a cryptographic key vault within the SIM keeps the private keys and secrets tamper proof and secure. SIMs are generally tamper proof hardware with a dedicated crypto processor and a highly secured SIM OS, providing the level of assurance required to private keys safe. Keys stored on the SIM in this way, are generated on the SIM and preferably never leave the SIM.

Table 1 summarizes the list of preferable crypto algorithms that are used. Other algorithms may be used.

**Table 1**

| Blockchain / Crypto Network | Public & Private Key Crypto Transaction Signing Algorithms |
|---|---|
| Bitcoin | ECDSA SECP256k1 |
| Bitcoin Cash | ECDSA SECP256k1 |
| Ethereum | ECDSA SECP256k1 |
| Ripple | ECDSA SECP256k1 |
| R3 Corda | ECDSA SECP256k1 / R1, RSA (3072), EdDSA using the ed25519 and SPHINCS-256 (experimental, post |
| Hyperledger Fabric | ECDSA / RSA |

Blockchain and crypto currency networks typically rely on asymmetric cryptography because their transactions are peer-to-peer or within a group of participants. The list of participants amongst different transactions may be different. Given this peer-to-peer nature of blockchain transactions, the usage of Symmetric Cryptography may not be feasible. Additionally, using Asymmetric Cryptography, blockchain and DLT transactions are auditable by third parties. The use of PKI within the current system makes it is possible for an entity or person to verify a transaction without having access to the private keys.

### EMV tokens

EMV is abbreviation for Eurocard (RTM), MasterCard (RTM), Visa (RTM) and stands for a defined specification for payment applications and implemented in most of today's banking card chips. It works with symmetric cryptography by accessing securely stored authentication information on a banking card chip. In the present environment, EMV may be used to sign payment transactions and send them to existing payment rails to enable transactions. Therefore, the SIM Wallet will be used to hold (symmetric) key values for payment applications, which are then used by device middleware and facilitate EMV payment through the present system.

In this enhanced or optional feature (used with any of the described implementations), this provides an option for a user to select to pay using a blockchain or existing payment rails by EMV. From a security perspective, SIM cards are already able to pass banking card certifications.

### Wallet of wallets

The SIM is used to provide keys relating to a desired payment method. The wallet itself that is used for payment does not need to be stored on the SIM (but may be). The wallets used to interact directly with the distributed ledger may be provided by a separate entity, server or proxy server, or broker (e.g. DAB) and selected based on payment method preferences dependent on the particular use case.

Third party documents may be deployed onto the SIM over-the-air (OTA). The wallet application on the device securely interacts with the SIM part of the application (applet) and establish a binding (also via OTA). This follows a Security and Certification process for the Security Domain as well as approval for integration with external applications.

### Key Management

A well-defined mechanism to manage the lifecycle of keys used in transaction management may be implemented. Lifecycle management of cryptographic keys includes key backup, restore, key revocation and renewal and may implement security policies to handle lost, stolen and/or compromised devices. Private keys are the most sensitive asset, and are not backed up in clear or unprotected environments. For backup and restore of transaction signing keys for blockchain, there are a number of different mechanisms that are used.

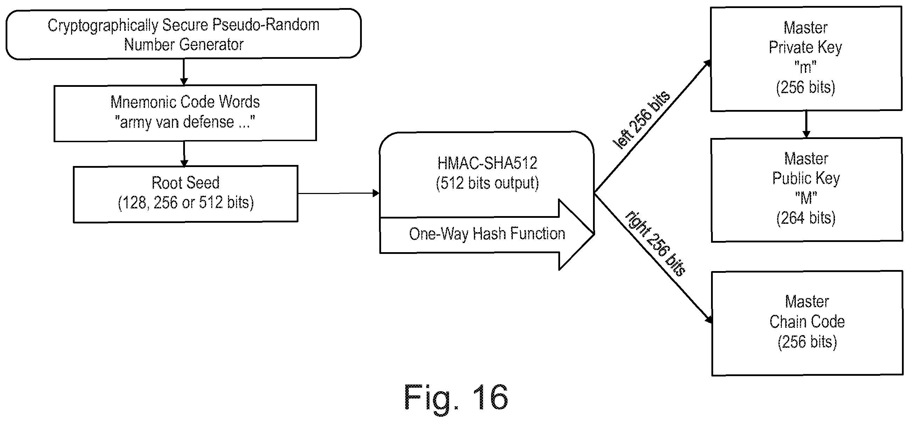

For example, Bitcoin defines deterministic key generation based on a human readable series of words to generate a seed and generate key pairs using the seed based on the BIP39/BIP32 specification. BIP 39 implementation specifies deriving the keys from a mnemonic that may be remembered and re-entered in order to restore the keys. BIP32 defines hierarchical deterministic wallets, which derives keys based on a seed and an index value. Such mechanisms may be used in the present system and is illustrated schematically in figure 16.

In another example implementation, a SIM Backup Vault Service backs up components or parts of private keys on other SIMs in a transparent way so that no single SIM has the complete value. Restoring a key can be a collaborative effort involving the collection of components of backed-up values (k out of N) from a cluster of SIMs that were used in the backup process.

In a further example implementation, a blockchain smart contract based solution reduces the complexity of the backup and restore process. For example, a smart contract account holds the digital asset similar to an escrow mechanism, until specified conditions are met. Accounts associated with loT devices would only deal with micro payments and would not hold any digital value or crypto currency on their own. Smart contract accounts can define the rules for resolving the scenarios in which some devices are faulty and how to transfer the account to some other device, for example.

### Generic Bootstrapping Architecture (GBA)

The Vodafone SIM Trust architecture based on Technical Specification (3GPP TS 33 220) also known as the Generic Bootstrapping Architecture (GBA). As with certificates, GBA is used to establish trust between parties. Whereas certificates rely on asymmetric cryptography to create key pairs that are different and that can be used in conjunction with each other to support cryptographic functions. GBA uses a hardware based Trusted Execution Environment (TEE) to store symmetric keys and to provide functions to use these symmetric keys to derive temporary keys that can be used to support at least three functions: Authentication, Confidentiality Protection and Integrity protection. More details on the GBA Standard can be found in ETSI Technical Specification TS 33.221 V14.0 (2017-05).

In the loT environment the GBA TEE is provided by the SIM. The SIM is used to store credentials to support authentication key derivation and key agreement functions.

Symmetric encryption suffers from the disadvantage of requiring keys to be distributed and shared between all parties that need to communicate with each other. This is referred to as the Key Distribution Problem. The Telecommunications Industry relies on Symmetric cryptography where the keys are distributed during the SIM manufacturing process and where symmetric keys are stored in two places:
1. Subscriber Identity Modules (SIM) which are hardware token devices that are stored on the User Equipment (UE) which might be a mobile phone or an IoT device; and
2. Centrally in the Operators core network on an Authentication Centre (AuC) and accessed via a Home Location Register (HLR).

The security of this distribution process relies on secure processes being followed by the SIM manufacturer and the Cellular Operator in the management of this key material.

However, a number of entities have been know to target the processes and the people involved in the distribution of this key material. Industries relying on SIMs to secure their assets have countered this Key distribution attack problem by using rigorous security processes and vendor selection. However, this can be costly.

### Communication Flow

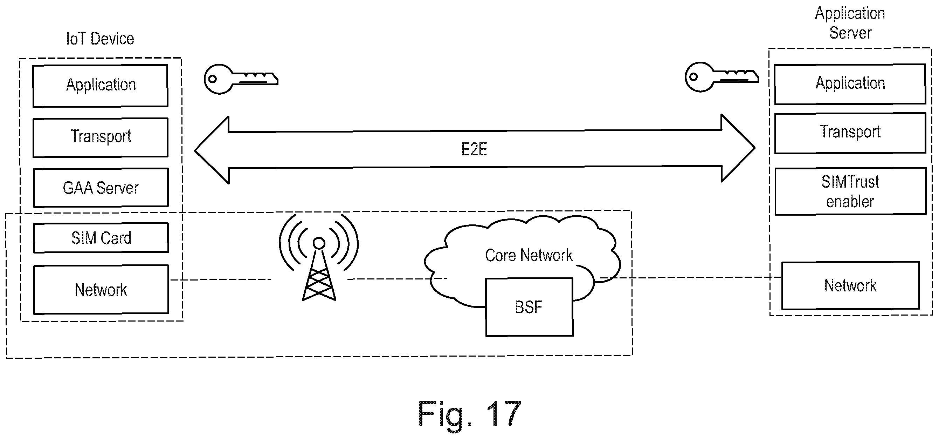

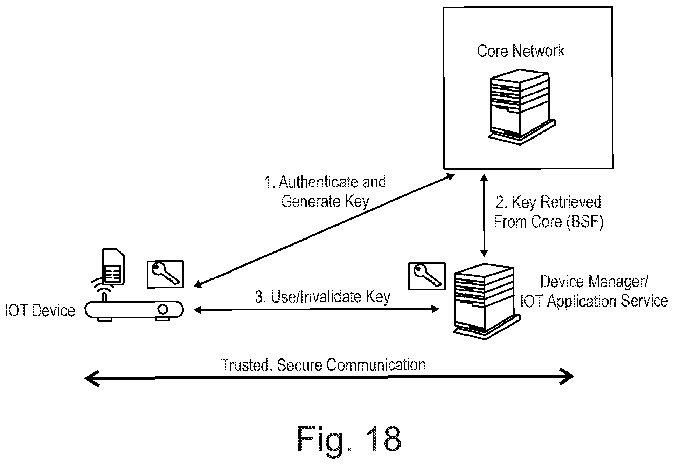

The SIM card is used as a root of trust to derive shared keys which can be used to achieve end to end authentication and encryption at the application layer at scale. In general, this process relies on the 3G AKA process (AKA = Authentication & Key Agreement). The AKA process is used when any mobile device attaches to a mobile network (>2G) and performs mutual authentication and key agreement. Figures 17 and 18 show at a high level, the communication flow used for the SIM Trust implementation of GBA.

The steps for establishing a secure channel between the device and a backend applications consist of two steps: Key generation and Exchange data through the secure channel using the key.

### Key Generation Process

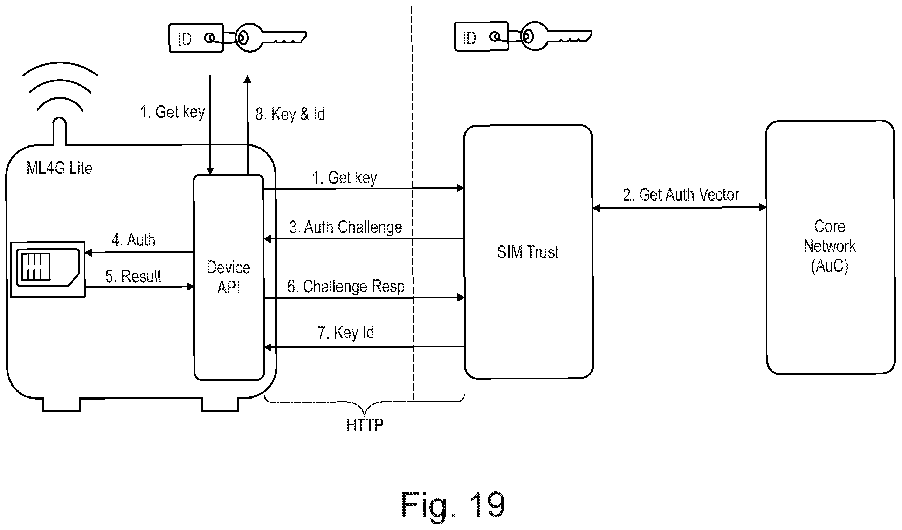

The key generation process is shown schematically in figure 19. The SIM interacts with a device API within the device, which obtains the symmetric key from the SIM Trust server in communication the core network. The device communicates with the SIM Trust server over http to derive the shared secret in the form of the symmetric key. This symmetric key is stored authenticated and stored within the SIM.

### Exchange data through the secure channel using the key

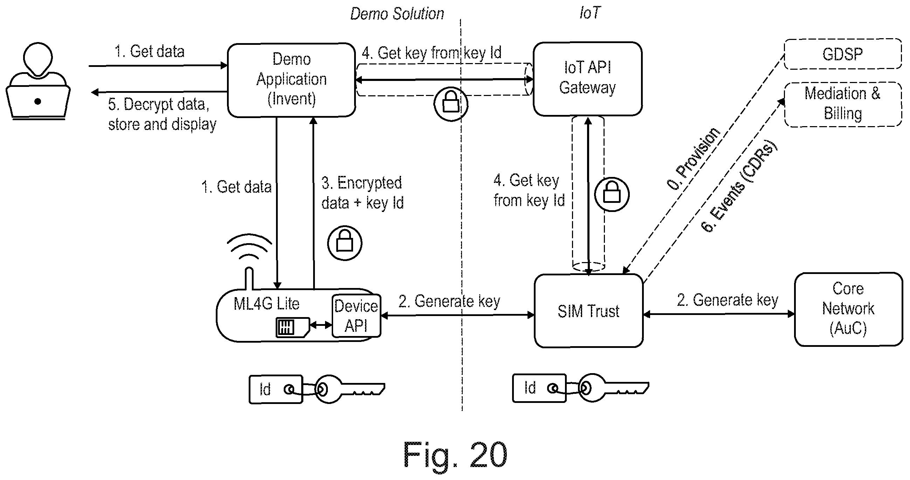

Once the shared secret (symmetric key) has been derived, it may be used to secure a channel to communicate data. This is shown schematically in figure 20.

The Communication Flow through each network entity is described below:
The Device Management (DM) Client queries the Generic Authentication Architecture (GAA) Server for a key.

GAA Server establishes identity of SIM (AT+CSIM).

Meanwhile, GAA Server tells the DM Client to wait.

The DM Client can handle other work whilst waiting.

The GAA Server asks the UbProxy for an Authentication Vector using the identity.

UbProxy validates the request and routes it to the correct Bootstrapping Server Function (BSF).

BSF request the AV from the HLR.

HLR returns an AV to the BSF.

BSF stores credentials and returns a version of vector to the UbProxy with 401 code. UbProxy returns same message and error code to GAA Server.

Which requests an authentication from the SIM.

A valid response (DB at the start) allows a valid response to be extracted and sent to the UbProxy.

Which then sends it to the BSF.

Which validates the response included in the message against that received from the HLR earlier and sends a 200 response.

UbProxy returns the 200 response to GAA Server.

GAA Server calculates the key and returns it to DM Client.

DM Client now uses the key as required and passes the Id to its server.

When DM Server needs the key it queries the UbProxy via the NAF using the Id.

The UbProxy sends the key request to the appropriate BSF.

Which calculates the key and returns it.

UbProxy returns key to DM Server.

DM Server uses key as necessary.

Starting from the SIM Trust (e.g. from Vodafone), middleware on the device side enables the device to message between the SIM and SIM Trust platform (bootstrapping server function, BSF) in the network. The device supports SIM Trust Device Libraries and have integrated software libraries (DDK). On the backend side an application retrieves the shared key from the SIM Trust platform using an application processing interface (API) call via an API Hub.

A particular global data service platform (GSDP) may enable GBA (e.g. SIM Trust) for particular SIM cards or IMSI ranges.

### Device

### Generic architecture

For using the device as an integrator layer between SIM and DAB, four interlinked components can exemplarily be provided:
SIM Centric: a SIM card (including a secure element and a hardware component that stores cryptographic keys and that can authenticate and sign transactions and data).

Libraries provided by the SIM manufacturer: a set of libraries exposing the SIM's functionalities for use by connected applications (e.g. Crypto Middleware mentioned).

Middleware: Middleware component that exposes the SIM applet infrastructure capabilities for applications that are unable to directly embed the SIM manufacturer's libraries, or for applications and devices running outside the device (e.g. a data gathering network).

Events Detection: application(s) / algorithm(s) that detect and transact events either with the rest of the DAB Service, or directly with blockchains and marketplaces and/or exchanges.

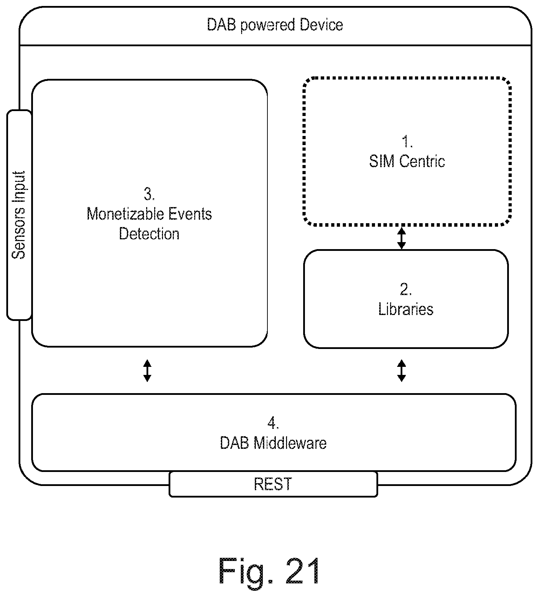

These components are shown schematically in figure 21.

Together with the Services, and the use of existing capabilities like GDSP (Vodafone's Global Data Service Platform for managed loT Connectivity), SIM Trust or loT SAFE, devices can be seen as edge integration points, fulfilling the functions of blockchain wallet and trusted authenticator. They also open up the ability to provide secure autonomous events, or to be used as simple Hardware Secure Modules (HSM).

The Middleware enables devices to smoothly participate in a transaction ecosystem, enabling applications to embed manufacturer libraries and consume SIM capabilities for key provisioning and transaction signing. Applications running outside the connected device can also access the Middleware through its APIs, making use of these capabilities.

Devices process or gather data ranging from direct readings to computed analytics (e.g. cargo occupancy assessments) , that (in the PKI on SIM case), once encrypted and signed with the SIM Cards' private keys, can be tokenized into any blockchain or stored elsewhere within the platform for cross-vertical usage.

### Middleware for Secure Element on SIM

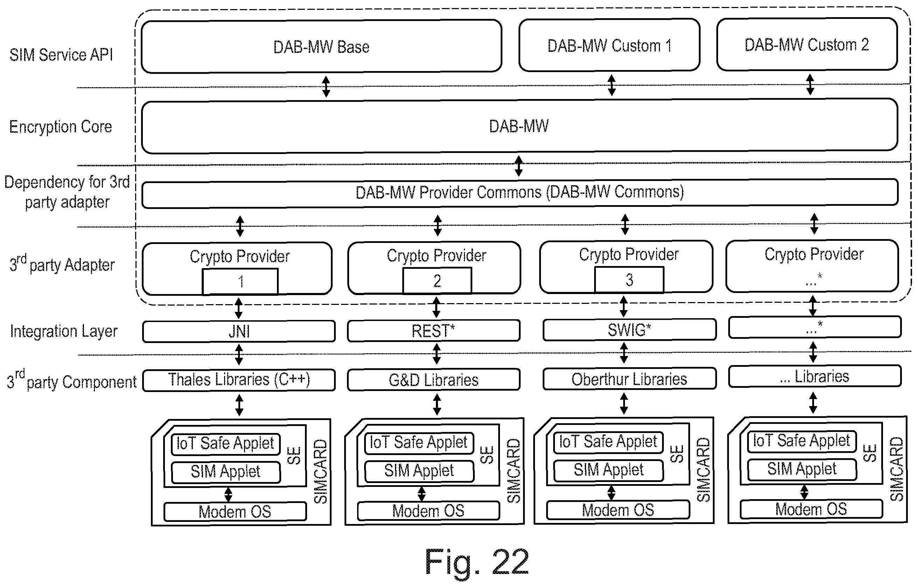

Typical loT deployments such as those shown in figure 22 may benefit directly from GSMA loT SAFE providing secure transfer of sensitive data and device authentication. Nevertheless, it requires the mentioned middleware on the device to facilitate communication between the SIM Applet and the application side.

### Architecture

The Middleware for Secure Element on SIM abstracts dissimilar types of applet management through a modular application, enabling the integration of devices and a digital asset broker (DAB) Service platform. It provides a unified single RESTful API (the SIM Service API) for applet management, regardless of manufacturer.

In order to expose SIM capabilities to devices, a Crypto Middleware library provides and interface with an applet execution platform. The libraries may include OS-level C libraries and/or framework-ready modules for Java, Android or Swift, and provide methods for managing the applets themselves (deployment, deletion, updating, etc.), as well as the operations made available by each. The DAB Middleware components are outlined in figure 22.

The SIM Service API is a set of base endpoints that expose the unified operations described previously and for each received request, the Encryption Core is responsible for orchestrating the necessary steps for interacting with third-party vendor integration options, be they external or embedded Java libraries, for example. Since each of those come with their own logic flows for applet management and utilization, individual adapter components may be interfaced by a DAB Middleware Provider Commons layer. This enables operations provided by different manufacturers to be available.

### Implementation

In an example implementation, two device configurations aligned with the loT SAFE applet running inside Secure Element of the SIM cards are provided:
1. DAB App running on a mobile phone directly accesses its SIM card through an embedded Android library for signing and validating datasets as instructed by the DAB Service; and
2. A 4G-connected automotive M2M router (in a test, simulated using a RaspberryPi and a Vodafone USB Connect 4G v2 dongle but other suitable hardware may be used) contains the SIM but exposes its cryptographic capabilities to other applications through the DAB Middleware.

The implemented DAB Middleware use the following example technologies:
Spring Boot;
OpenAPI;
Java Native Interface (JNI); and
iot-safe-middleware. Other technologies may be used.

In one example implementation Java Spring Boot covers a large number of possible integration scenarios with manufacturer libraries. This also opens the possibility to include it in several kinds of devices, including smart devices or loT Gateways, as long as they can run JVMs. For low end devices where CPU and Memory may be constrained, using a JVM is not the most efficient implementation but it does abstract away hardware differences.

This may be split into configurable modules that can be extended for each supplied library, an approach taken for providing easier integration of integrations methods, either by directly importing code modules, or by interacting with OS-level libraries (when e.g. C libraries provided by the SIM manufacturer need to be interfaced by way of a JNI foreign function interface). This may be instantiated as a standalone application running on the same device connected to a communications unit or it may be embedded on the event detection software (if Java-based, for example).

Four example SIM Service operations may be defined, which are concerned with the cryptographic capabilities made available by the loT SAFE applet installed in the SIM. These operations mirror very similar signatures of the API methods made available by the Thales Crypto Middleware C++ library (see also https://github.com/ThalesGroup/iot-safe-middleware). The Crypto Middleware library provided by Thales can in itself be used in two ways or compilations: the Java Android library for direct applet communication from inside a regular Android app, or the C++ build, suited for the middleware approach described above.

### DAB Middleware APIs

In an example implementation, the SIM Service operations concerning cryptographic capabilities made available by the loT SAFE applet installed in the SIM are called by applications according to their need to get a public key or sign a message. They all follow the "container"-based approach ("containers" are secure memory spaces holding each a client certificate and a key pair), and each deployed DAB use case may be aware of which key type or digital signature algorithm it requires. Therefore, it may also be aware of which parameters/containers to use when calling the DAB Middleware.

In an example, the API may be briefly summarized as such:
/containers: for listing information about a SIM's containers;
/certificate: for retrieving the client certificate of a particular container;
/pubkey: for read the public key of a particular client certificate/container; and
/sign: to sign a message using a particular client certificate/container.

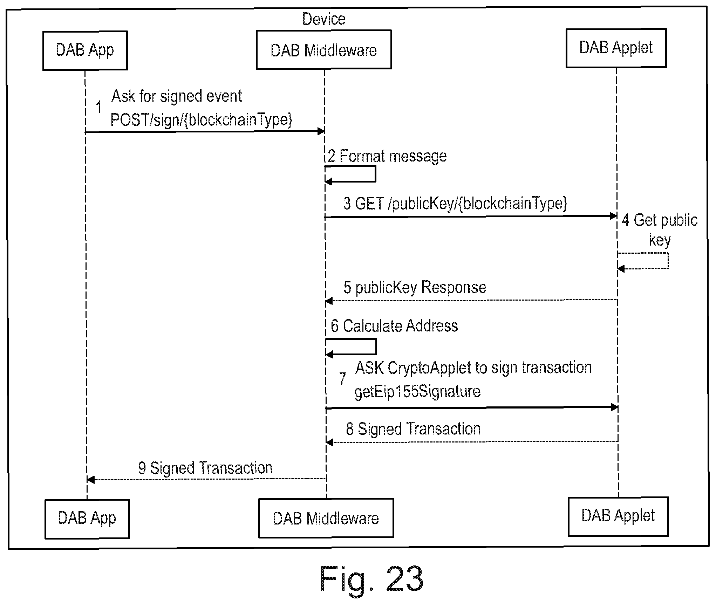

This business logic is shown in figure 23.

### Applications

### Transaction Signing using SIM Wallet

Blockchain, Crypto currency networks and other micro payment solutions rely on ability of nodes to sign transactions. Due to this peer to peer nature of these transactions, it is important to be able to prove that node participated in the transaction to ensure non-repudiation. Keeping the private key associated with a Blockchain address in a safe location (ideally, tamper proof crypto module) is therefore critical.

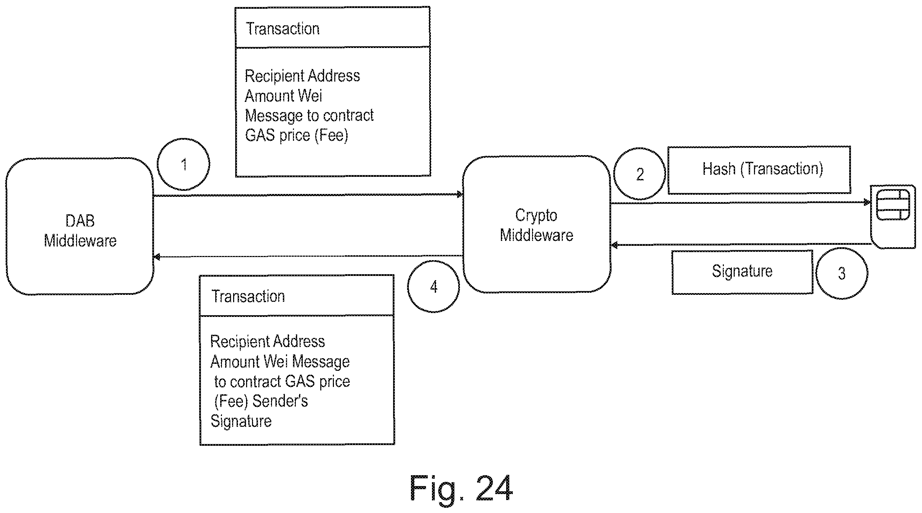

A transaction prepared by DAB Middleware is signed using private key securely stored on the SIM. An example of this is shown schematically in figure 24.

### TLS authentication

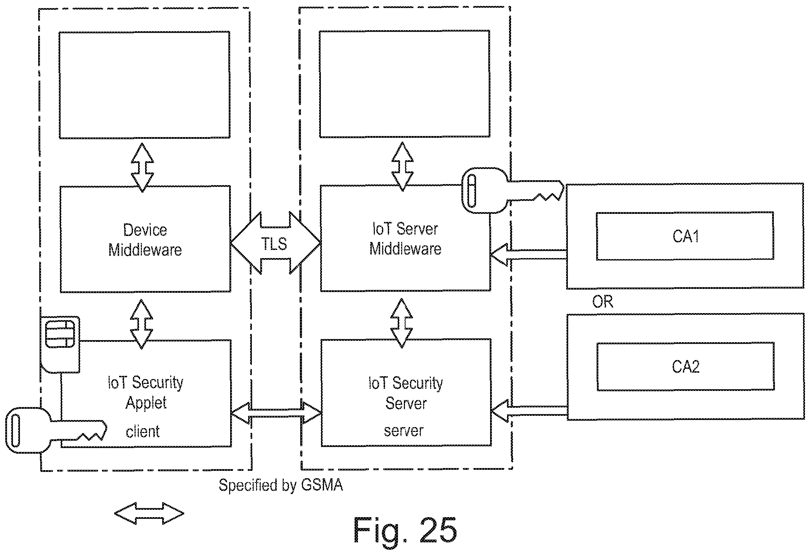

Client Keys and Server Root Certificates securely stored on the SIM (e.g. an loT SAFE SIM) can be used not only to support DAB blockchain applications but also to perform mutually authenticated TLS session between the device and a service running in cloud. This is shown schematically in figure 25.

The DAB Middleware may also deliver control over key generation, wallet administration, and the management (installing, deletion, etc.) of applets installed on the SIM. This may entail, e.g., exposing control over the loT SAFE applet to generate new key pairs or modify digital signature algorithms.

Due to the diversity of SIM and Devices manufacturers, the DAB Middleware is available as a software development kit (SDK) for multiple languages and operating systems, making it possible for OEMs to smoothly embed it into their own devices. Given its Java-based nature, another option includes porting it into the Java Card technology delivering a single application that may be preinstalled in all SIMs for out-of-the-box DAB accessibility.

The SIM Service API is available at the DAB API Inventory for direct device management by application accelerators or third-party applications connected to the DAB platform (if authorized to do so). Preferably, this may be consumed by each DAB Service instance for controlling the devices transacting in its own use cases.

### Sensor Data Extraction for Event Detection

In an example implementation, IoT deployments may use devices as end nodes, which can have various functions. These can include:
Directly forwarding sensor data to upper layers (cloud or server); or
Communicate with a gateway that performs the same function.

The sensor data may originate within the device, for example.

Smart devices and secure elements are increasingly prevalent, the ability to extract knowledge or generate actions upon the resulting data is becoming a key to loT autonomy. The ability to authenticate datasets, applications running detection algorithms may directly embed compatible libraries for accessing the SIM cryptographic applet or use the DAB Middleware to sign the information with a selectable private key, leading to an unalterable dataset.

The DAB device may also act as a control point for the deployment of device-side capabilities that can come into play on DAB-powered use cases (such as detection algorithms deployment, wallet management, etc.). DAB-powered devices may be accessible for the DAB Service to manage their detection software and SIM applets.

### DAB Framework

In an example implementation, the DAB Service is the instantiated component for a DAB stack and acts as the transaction and authentication platform for a DAB ecosystem. It provides capabilities for IoT devices to transact value for services/data and handles connectivity between mobile loT devices, multiple types of blockchain technologies, and any third-party external systems. For this, the DAB Service may offer REST-based APIs for the setup of use case orchestrations, for transaction committal, digital identity management and third-party service access.

Preferably, the system use the Java Spring Boot framework. This enables modularity capable of running in most on-premises or cloud-based machines. This is also a flexible environment for interconnection with different kinds of software and hardware applications, be they libraries, drivers and communication stacks. However, other frameworks may be used.

In an example implementation, the DAB Service may use the following technologies:
Spring Boot, Web3J, OpenAPI, Firebase Java SDK, Spring Quartz, Liquibase, Failsafe SDK, JJWT lib, Paho MQTT, PostgreSQL 10, and/or Spring Reactor.

### Role inside the ecosystem

DAB Service is the engine of the ecosystem, managing devices, use cases, flows and entities. In addition to all capabilities exposed through the APIs, the DAB service integrates external systems from third party marketplaces, other telecommunications components or additional blockchains networks.

Beside the connection to networks, devices are managed and accessed, with the DAB Service the connecting, managing, authenticating and certifying devices. If an external entity (e.g. company) wants to join the ecosystem, then it may use the DAB Service - "as a service". If another entity wants to have more control around the devices, an instance of DAB service can be deployed for specific use with their own devices and control their own pieces of the ecosystem.

IoT devices may act as sensors or low-energy devices with a low computational power. Furthermore, devices do not need to be connected every time and it is not necessary to connect to a distributed ledger (e.g. blockchain) or other type of network all of the time. To reduce the computational burden of devices, the DAB service may acts as a proxy (or proxy server) to connect devices with any kind of network. This reduces the weight of processing data from devices, allowing the less powerful devices to be part of the ecosystem.

### DAB Management Core

A DAB Management Core acts as a main communication layer between all the parties, consisting of a flow orchestration engine and an API component. The flow orchestration engine consists of three components. Each component is accessible through APIs.

### Flow Orchestration Engine

A Provisioning Engine is responsible for handling both the setup and management of the use cases instantiated in each DAB Service instance, abstracting the linking up of use cases with particular implementations or technologies. Additionally, the provisioning engine handles the configuration of these technologies and third-party services. It delivers an access layer for the management of devices participating in the DAB stack for deploying algorithms and key management (via SIM Service API). Following functionality is handled in this component:
Business Rules: A set of rules that define the interactions that each device can have with a certain network or marketplace / exchange.

Use Cases Management: Management (creation, edition and deleting) of available use cases for each DAB instance. It is also responsible for provisioning on devices the usable use cases that they can trigger.

Connectivity: Integration with other platforms like GDSP for SIM management, location services, etc.

Algorithms: Governing, cataloguing and deploying of algorithms into DAB-powered devices leveraging the SIM Service API. This capability provides a high level of customization and possibilities on the devices preferably upgraded over the air so that they can discover new events based on their own data, without the data leaving the device.

### Authentication Engine

An Authentication Engine is responsible for handling all digital identity logic for connected devices and created smart services. Entities ranging from devices, to Partners or Services have a Digital Identity that can be used to pair and connect businesses (managing what is accessible to each other at a given time). Therefore, this engine offers the ability to create loT devices entities within a network of external back ends and authenticate against the respective registry. Therefore, the authentication engine univocally asserts identities across the DAB ecosystem, preferably by way of a unique identifier. Devices holding provisioned keys and as such, providing context on identity and transaction authenticity, can be authorized to plugin and provide data with proven and provable provenance.

### Transaction Engine

Depending on the use case, different functionalities can be activated, and this customisation is an additional benefit of the DAB platform. Authenticating devices in this way assures that received transactions are encrypted and signed from a trusted device i.e., through the SIM card's private keys, making sure of provenance and identity. Therefore, transactions can immediately be performed on multiple marketplaces/exchanges (normally, each focused on specific domains).

As such, the Transaction Engine may be responsible for handling logic tending to the processing of received device transactions and API calls. This requires redirecting information across DAB Service layers and making inter-component requests. For example, this can include accessing databases, external systems, or the blockchain integration. On receiving a candidate event, the DAB Service may decide which use case to apply depending on more than the contained data and may check for algorithms chosen at the device or insights produced over those data.

In cases where transactions require "long" processes or a marketplace-type offer/demand matching procedure, the Transaction Engine provides interfaces to the DAB Management Services off-chain processing component that provides services to run special algorithms in secure CPU enclaves. This may include services controlled by the DAB Service or by a third party.

The Transactions Engine provides ingress endpoints where datasets enter the DAB stack. These may be delivered by synchronous HTTP POSTs to DAB (or other communication protocols) which parses and routes them to an applicable use case, initiating the (configured) orchestrated flow associated with it.

A typical value transaction process may follows three steps. These may be applicable to most use cases and show how a use case implementation is approached:
A received message triggers the start of a value transaction process. For example, this may be a transaction sent by a DAB-powered device (see Transactions Engine), or a specific message received on a Custom API deployed by the DAB Service for third-party consumption.

The producer's identity is validated, and the activated use case identified. A resulting action is produced, such as deploying a transaction in a blockchain or delivering a message or signal to an external system or DAB device.

Applications may cover several sorts of use cases that go beyond simple token transference, such as the concepts of session recording and dataset matching that arise as viable practical applications for commercial use. In order to generalize the many types of data that may be transacted, the Transactions Engine may enforce an API message format that is outlined to be as much generic as possible so as to contain all information needed to indicate which use case flow to activate.

In an example implementation, example JSON code is shown below. The message properties may indicate:
transactionld - a UUID generated by devices and unique for each message;
usecaseType - should univocally identify both the blockchain technology to be used, plus the operational mode of the use case (e.g. Ethereum, session-based, etc.);
transactionType - used by all use cases but limited to the keywords needed to describe each step of the that operational mode (e.g. Start session, open session, Pay);
fromDevice - the SSID - a globally unique identification code for each SIM - used for device identification;
creationDate - timestamp generated by the device;
transactionObject - contains the data to be inserted into a blockchain (blockchainObject), along with a "locationObject" property that carries GPS data sent by the device indicating its present location;
dataType - used to indicate the type of data to be inserted to the blockchain (the data contained inside the "blockchainObject"). This could be used to discriminate its JSON format.

```
 {
   "transactionld":"{{v4uuid}}",
   "transactionType": "newdata",
   "fromDevice": "8981300999090900006F",
   "creationDate": "2020-04-27T17:32:47.020154Z",
   "useCaseType": "service",
   "dataType": "generaldata",
   "transactionObject": {
     "blockchainObject": "{\"borrower\":\"Daimler\",...}",
     "locationObject": "{\"location_data\":{\"lat\":51...}}" }
 }
```

### Supportive Functions, e.g. Data Persistence Service

A Data Persistence Service deals with all the database connectivity the DAB Service needs for storing information describing use cases orchestrations, device configurations, device-service association data, and dataset hashes. It may be used especially when timing becomes critical.

The functionalities of DAB Management Core may also be supported by a Platform GUI. This may be implemented through INVENT but may use other technologies.

### Common APIs

The Flow Orchestration Engine may requires a set of Common APIs of core functionalities to provide endpoints suitable for building and managing use cases, authentications and transactions.

### DAB Management Services

The DAB Management Services functionality serves as the place where customized data processing related to a certain industry vertical or use case may be implemented. It may be independent of the DAB Management Core and have its own APIs that can be defined and developed any time a need arises to integrate third-party services for DAB interaction. To improve scalability, core elements may be independent of customized elements.

### Customized Off-Chain Processing

In cases where transactions require matching processing (e.g. Truck Capacity) or in case of micro-payments aggregation (e.g. Tolling Services), algorithms may be run in Python and in a software guard extensions (SGX) enclave.

### Customized APIs

When a specific integration is required for a use case to be triggered by an external system, the endpoints exposed by the DAB Service may be organized in this component. These use cases generally depend on data already present in the DAB stack, such as querying the DAB for a digital device identity, requesting a signature, or triggering a blockchain transaction, for example. These bespoke control points can go beyond REST and be made available in any other technology supported by Java, such as SOAP, MQTT, etc..

### DAB Blockchain Services

### Ledger of Things

The Ledger of Things provides the ability to create, maintain and use digital IDs based on a Corda network, for example (other distributed ledger technology may be used). This will be then consumed by DAB Management Core for authentication and transaction signing. Bulk provisioning of Devices on the Ledger of Things allows enterprises to easily and simultaneously create the digital twin of a large number of their devices. A DAB Exchange includes event detection will be a key differentiator to map devices and use cases to each other automatically.

### Blockchain Hub and Smart Contract Engine

### Blockchain Hub

A Blockchain Hub governs the different integration mechanisms chosen by blockchain implementations, providing the DAB Core services with interconnection capability. These mechanisms may range from the use of embedded Java libraries, to system level interactions with external applications running alongside the DAB Service itself. Therefore, a layer provides different classes that segregate by technology or partner all logic needed for their use. When building a use case (via the Provisioning Engine), a programmer expects to easily select one of these connectors, configure it to use a particular node, server, or credentials, and be provided with simple methods for transaction management.

Different types of distributed ledgers may be used. For example the following three different blockchain may be used:
In Corda networks, transactions are made via RESTful API with several nodes of the DLT network. It would be also possible to use RPC connectors, but RESTful API offer a low friction and easy integration.

In iExec networks, successive operating system processes are run, where a set of ordered commands (as described in the partner's documentation), are issued to a NodeJS client (iExec SDK), installed side-by-side with a DAB instance, that synchronously executes and returns textual JSON outputs that need to be processed and interpreted by the DAB.

EWF built a system that uses an Ethereum blockchain as a data marketplace, but having in view device participation being limited to "dumb" devices that only receive MQTT messages. Therefore, for integrating their EWF into the DAB Service, a MQTT client / connector manages all EWF flows for all devices that the DAB Service authorizes.

Given the complexity of existing blockchain implementations it is possible to integrate further connectors based on libraries such as Geth and Web3 to enhance fine-grained connectivity options.

### Example Use Cases

### Use Case: "Services Payments"

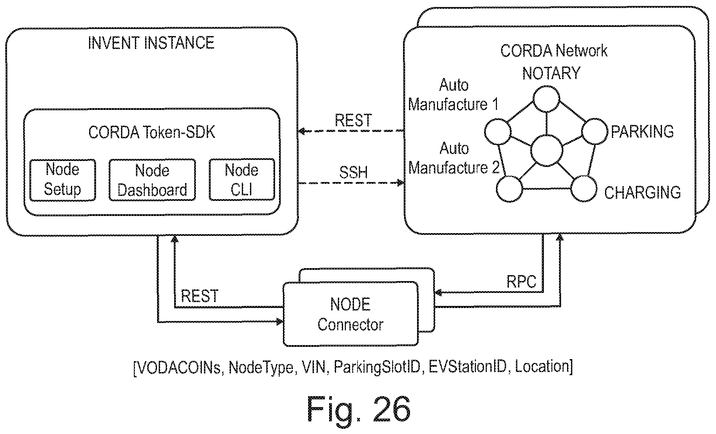

This use case demonstrates how token exchanges can be used to use and pay for services like Parking or Tolls (automotive). R3 Corda technology implements a token SDK framework to create a one-time token/payment transaction. Five nodes within a network include one notary acting as an authority node, two nodes for services and two nodes for consumers. Each node on the R3 Corda blockchain represents major entities, like service companies (e.g. parking, tolls companies or EV-Charging providers), and consumer companies, like automotive companies. Each device can trigger a transaction but its identity is not necessarily mirrored on the blockchain itself but may represented on a smart contract that is triggering. This is shown schematically in figure 26.

In terms of smart contracts (flows on Corda), beside all the flows to manage the network, (including viewing all transactions, gathering information or performing calculations) a main flow to creates and records transactions made by each device of each entity. A CoinTokenTypeContract represents a CreateEvolvableTokenFlow object. When triggering that flow, there's some mandatory fields like the identity of the device that is starting the flow, which entity represents that device, who is the consumer of the service. APIs manage and trigger transactions on the network and integrate them with external portals and applications.

The network may be deployed on AWS (or other) environments, segregated by entities with a defined structure based on access and network available ports and APIs. Each node has its own webserver capable of offering their own APIs and operate independently of the rest of the available network.

Integration of functionality has been made within a smartphone or other device (e.g. Android phone). The platform is capable of monitoring the network and manually triggering actions. The solution uses REST and SSH to interface with the R3 Corda instance, directly on nodes and provides managed capabilities like monitoring network transactions, triggering new transactions and controlling nodes through a Node-CLI. The next images show that capabilities in detail.

Within the automotive scenario paying for services may be achieved automatically by using R3 Corda blockchain capabilities.

### Interfaces/Dependencies

Various interfaces enable the control and triggering of transactions on the nodes through RESTful (or other) APIs. Other interfaces may be used, including RPC and SSH (see figure 26).

The following provides a list of example APIs that may be used, together with a description of their functionality. These APIs may be used internally or accessed by external entities.

| Name | Description |
|---|---|
| getMe | Get information about who the node is. |
| getPeers | Get information about the other nodes on the network. |
| getNetworkMap | Get a network map of connections. |
| getNetworkFeed | Get a network feed of transactions. |
| getNetworkParameters | Get network implementation parameters. |
| getRegisteredFlows | Get a list of possible runnable flows for that node. |
| getTransactionsID | Get a list of transactions IDs where the node has been involved. |
| getTransactionslnfoByID | Get information of a transaction by the ID. |
| getNumberOfTransactions | Get the number of transactions in the network. |
| getTransactionslnvolved | Get a list of transactions information where the node has been involved. |
| getNumberOfTransactionsInvolved | Get the number of transactions where the node has been involved. |
| getNodeInfo | Get information about the node itself. |
| getNodeTime | Get node current time. |
| getTransactions | Get a list of all transaction's information. |
| getVodacoins | Get the number of "Vodacoins" in balance. |
| postCreateTx | Create a transaction on the network. Described in the Business Logic Section. |

For each node inside the distributed ledger (e.g. blockchain network) the API'sare replicable and capable of running the same type of flows to interact with the rest of the network.

### Business Logic

Since interactions with the DLT (e.g. Corda) are made through a set of established REST endpoints and SSH connections, a DAB Blockchain Service connector coordinates the call flows needed for inserting and retrieving data from the ledger. For triggering these scenarios, a collection of user layouts in the DAB App build transactions following a message format described in an Exposure layer.

For this functionality, the service payment scenario (useCaseType "service"), requires only a "newdata" transaction type. It is possible to manually trigger several use cases and scenarios using an application (DAB app), for example.

To pay for services like the Congestion Charges, one-time parking, or any other service, the user selects on the DAB App the menu entry "New Monetizable Data", tab "Services", and fills out the fields:
Borrower - To who he wants to transfer tokens/value (service provider);
Value - Tokens quantity.
Type:
   MIN - Duration amount (e.g. minutes).
   CC - Congestion charge amount in monetary value.
   PAY - Any other payments in monetary value.
   Sub value - a numeric amount corresponding to the selected payment type (e.g.: 3 minutes, 3 euros, 3 Vodacoins)
   VIN - Vehicle Vin
   Slot ID - Optional field that can be used, for example, to specify a parking slot or toll port.
   Location - Optional field that can be used, for example, to specify a congestion area entry point or a parking location.
   ICCID - SIM Card ICCID or UICC.

This may be translated to a JSON object.

Automatically triggering and integration (e.g. automotive integration) provides improved direct interactions with the blockchain. Furthermore, settlement between network parties may be facilitated. The blockchain may register all the transaction made by consumers or between parties and so services are able to transact in the same network with settlements occurring between them. A smart contract/flow may determine a particular debt and automatically transfer funds from one party to another. Alternatively, external billing systems may aggregate all unitary transactions present on the network.

### Use case: "Event Driven Fleet"

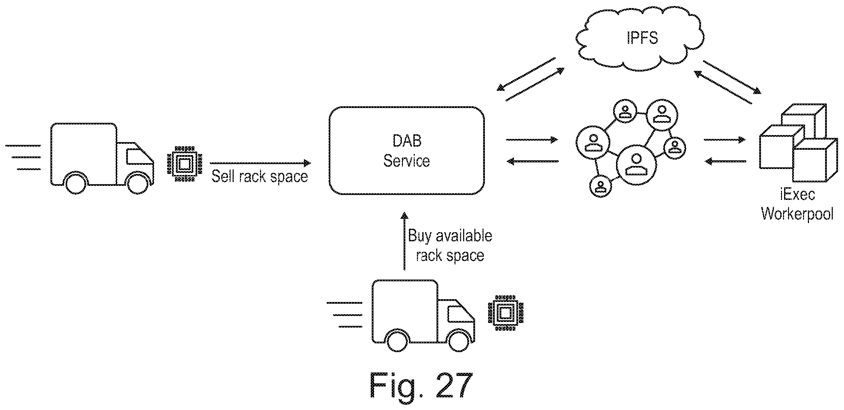

This use case directly may be used to generate data and provide a blockchain-based marketplace / exchange. This may be implemented in different situations and scenarios. In an example implementation, logistic companies may not make full use of freight cargo capacity. Sensor-generated data may be processed using edge confidential computing units to build "offer" datasets that, once shared in a marketplace or exchange, may be searched and bid on or bought by other parties or entities. In this example, the iExec platform was used to match jobs that are queued by the DAB Service and run by custom off-chain algorithms scripted by using iExec executed using Intel SGX enclaves. This is shown schematically in figure 27.

Whenever a seller wants to sell a route, it manually or automatically fills out an UI in the DAB App that will request the DAB Service to insert it on the iExec marketplace other exchange. Another entity may uses a similar process or layout within an application to describe their needs. Compatible offers (both past and future) may be searched for and matched. The DAB Service receives these queries and deploy matching jobs, notifying both parties if a match is found.

Automated deployment of datasets generated by detection algorithms may be employed.

### Interfaces/Dependencies

In a test system, a set of user interfaces has been created in the DAB App (Android or iOS based) to build offer and demand transactions and send them to Transactions Engine of the DAB Service.

In order to use the marketplace / exchange, the DAB Service interacts with an iExec SDK. This application is a command line NodeJS tool that wraps proprietary Ethereum transaction logic and another Blockchain Integration Layer connector for coordinating data insertion and retrieval. These operations each entail several OS calls to be run, where a set of ordered commands are issued to the SDK, which synchronously executes and returns textual JSON outputs that is processed and interpreted by the DAB Service. Since all iExec off-chain algorithms are run on secure enclaves, the datasets they use are not directly inserted into their blockchain. Instead these are deployed into a public IPFS network (or other file system), once encrypted with a secret generated by the SDK. This secret, along with dataset's IPFS hash, are each pushed to iExec during the insertion flow: the secret is sent to the Secret Management Service, and the hash is sent to the blockchain. For IPFS pinning services Piñata may be used. This implementation also use APIs.

The iExec SDK v4.0.3 was installed alongside the DAB Service instance in the same machine and required a configuration of NodeJS 8.10.0 and Docker 19.03.6.

The DAB App is used to create a set of user interfaces that build transactions that are sent to the DAB Service. This simulates capacity for offers and demand. However, such processes are automated in production systems with offers and acceptances being generated by different entities and process. A similar message format is used with two different types of transactions:
if "transactionType" equals "newdata", then an offer dataset is contained, triggering the DAB Service to deploy it to the blockchain/marketplace/exchange;
if it equals "lookingfordata", then it carries a demand dataset, containing the desired trip parameters.

Since the matching algorithm prepared by iExec deals with a strict dataset format similar for both offer and demand, a JSON structure that typifies a test scenario where a shipping company sells available truck space for hire at a certain price, date and route, both datasets inside the property "transactionObject".

### Trading Information

To manually create a dataset describing a space offering for a truck trip, the user selects on the DAB App the menu entry "New Monetizable Data", tab "Truck Capacity", and fills out the fields. In the production system, the dataset is created by individual trucks having sensors that can indicate capacity. The dataset includes:
Service Provider - Name of the service provider;
Offered Space - Quantity of available cargo units;
From - Trip origin;
To - Trip destination;
Date - Trip date;
Price - Asking price;

To manually create a dataset describing a request for a truck trip, the user selects on the DAB App the menu entry "Looking for Data", and fills out the fields:
Service Provider - Name of the entity looking for cargo space;
Required Space - Required cargo units;
From - Trip origin;
To - Trip destination;
Date - Trip date;
Price - Bid price.

Again, in the production system, the bids for cargo space may be automatically generated for entities requiring such services.

Upon reception of a "newdata" or "lookingfordata", the DAB Service begins a series of system level interactions with the iExec SDK. What is inserted into the iExec blockchain, is not the offer datasets themselves, but instead their IPFS hashes (along with other relevant iExec data).

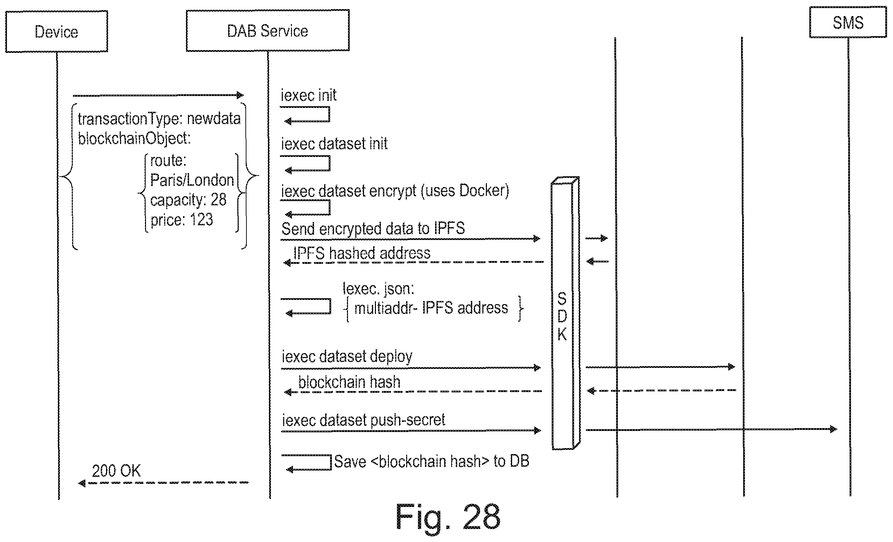

If a "newdata" transaction identifies a dataset to be inserted into the marketplace/exchange, in turn, a "lookingfordata" triggers a DAB-side flow that requires looping through the previously inserted "newdata" datasets to sequentially deploy and poll off-chain matching tasks (to be run at an Intel SGX enclave worker pools managed by iExec). This process is shown schematically in figure 28.

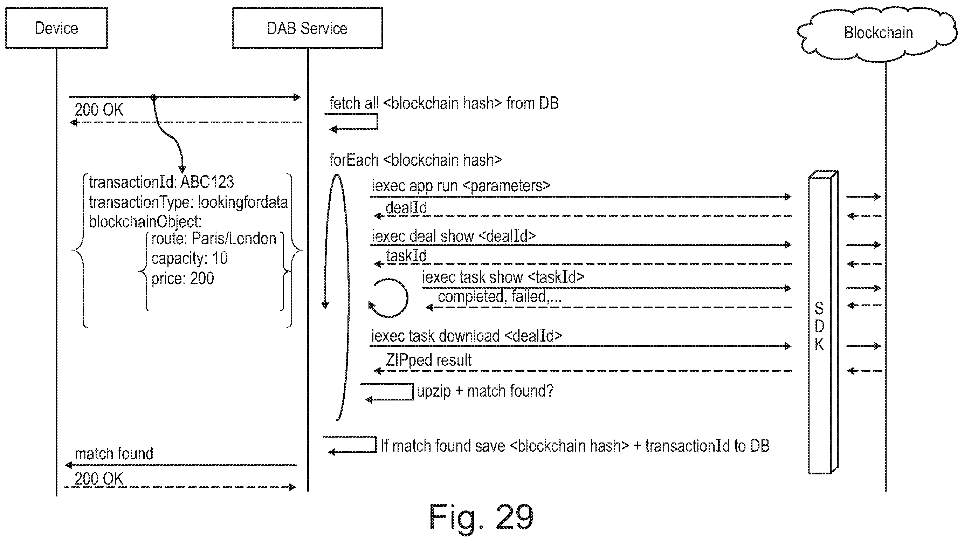

A matching process entails the DAB Service selecting unmatched offer and demand dataset hashes and inserting them into a "task" into the iExec worker pools. These tasks are picked up and run by the iExec worker pool, and then repeatedly polled by the DAB Service until a result is calculated. The DAB Service keeps an updated list containing all dataset hashes in its database. This process is shown schematically in figure 29.

Since these off-chain tasks are unable to execute multiple comparisons at the same time, the DAB Service is responsible for issuing executions on a dataset-by-dataset basis. If a match is found between an offer and a demand, their dataset hashes are registered at the DAB Service database, and the buyer's device notified.

In order to communicate matches to the devices that inserted both offer and demand datasets, Firebase Cloud Messaging platform may be used as it is a cross-platform cloud solution for messages and push notifications for Android applications, in particular. A component processes Firebase messaging for DAB-powered devices and all devices are made to register their Firebase connection token upon startup (sent along the device registration message POSTed to the DAB Service). Therefore, they are ready from boot. Again, in the production system, messages may be handled differently.

Automated feeding of data into the marketplace/exchange may be achieved using different mechanisms. For example, Al and sensor networks may be set up with automated market negotiations. Ready-made matching algorithms may also be deployed to secure worker pools.

In alternative implementations:
substituting IPFS with faster distributed storage solutions;
deploying matching algorithms capable of dealing with multiple datasets at the same time;
setting up specialized worker pools where the DAB Service unloads demand datasets and offer dataset hashes for continuous analysis providing asynchronous notification when a match is found.

### Use Case: "Energy Identity & Payment"

This use enables "DAB-ready devices" (with secure element on SIM and respective middleware) to be integrated into the Energy Web Foundation smart energy platform and become active participants.

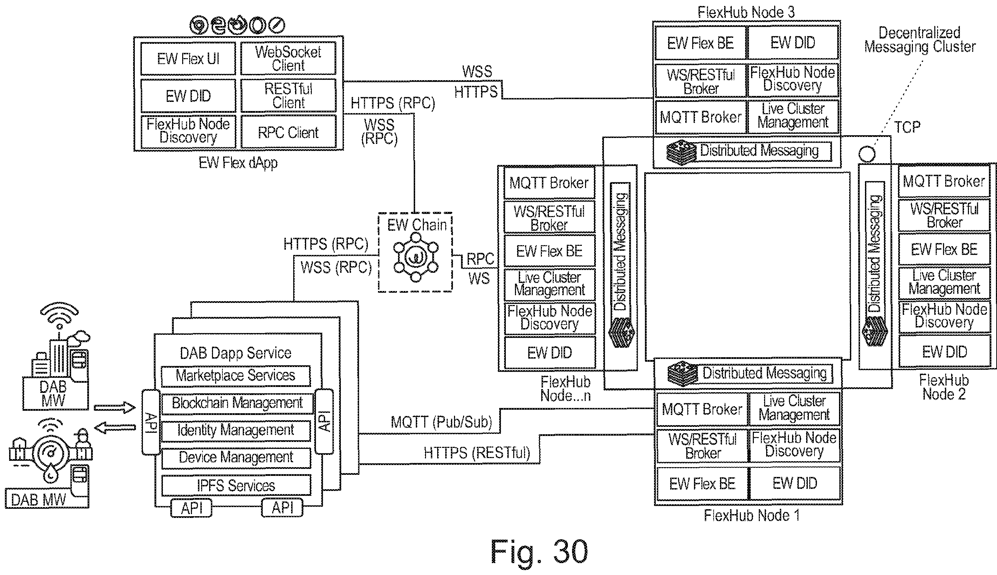

Connected devices exclusively read and digitally sign messages (all encoded in JWT strings) from Flexhub MQTT brokers. Asset owners' have programmed offer assignments (for buying or selling electrical power) and are managed and processed by the FlexHub platform. The DAB platform adds domain interconnection. This requires the DAB Service to be aware of transacted data and manipulates these data. Therefore, an integration architecture uses the DAB Service broker for devices and processes messaging with FlexHub nodes on their behalf. EWF device-side code (originally written in Python) is ported into a Spring Boot component running on the DAB Core that now serves multiple devices, without impacting in any way on FlexHub functionalities. A schematic overview of this system is shown in figure 30.

The relevant user/actor/roles defined by EWF include:
A TSO (transmission system operator) that submits requests for flexibility, defines constraints and limits and activates confirmed assets.

Asset Owners define offer parameters so that each of their personal assets can submit offers consistent with those parameters.

Installers approve the registration of Asset Owners' assets.

A Governing Body approves the registrations of other actor roles participating in the market.

TSOs submit their energy flexibility requests and constraints into the system, Asset owners submit their offers (either themselves or via third-party providers of intelligence), and the Flex system determines the lowest-cost way to meet the requests.

Other enhancements may include:
Registration, Provisioning, Offer creation automations.
Devices beyond those using Android or Java.

Devices are requested to sign transactions and notified of offer activations. These are triggered by the DAB Service. This avoids devices from each device polling their respective FlexHub MQTT queues for instructions. The DAB App provides functionality including:
Devices receive messages containing EWF transactions for signing, which are then POSTed to a custom endpoint on the DAB Core Service API, triggering the DAB Core to complete a respective EWF business flow;

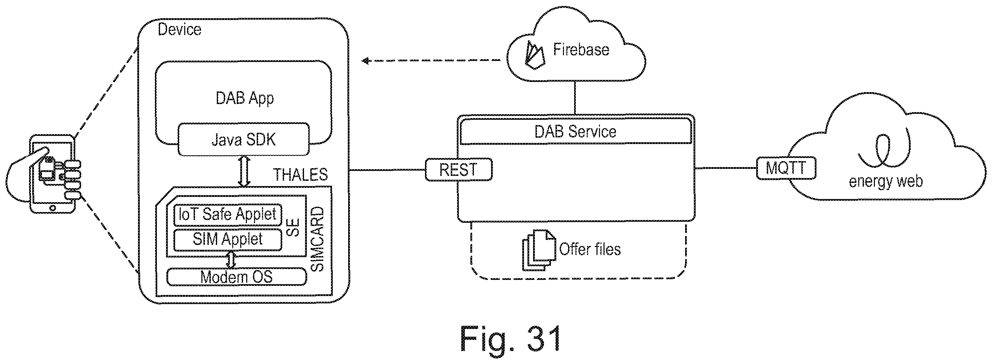

Whenever activation messages are received, the DAB App displays a user notification, which may be substituted by a useful and real action (e.g. turning on/off a device reachable from the mobile application). This is shown schematically in figure 31.

### Business Logic

Flows are initiated from inputs made by the various EWF actors in the Flex WebApp. Since the DAB Service is the sole component that implements EWF business logic (and any sort of flow state observability), it asks devices to sign the various JWTs required by the FlexHub.

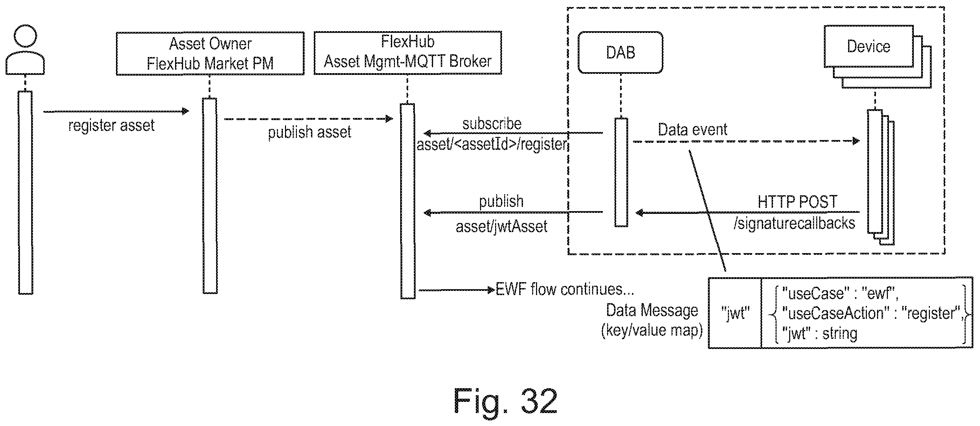

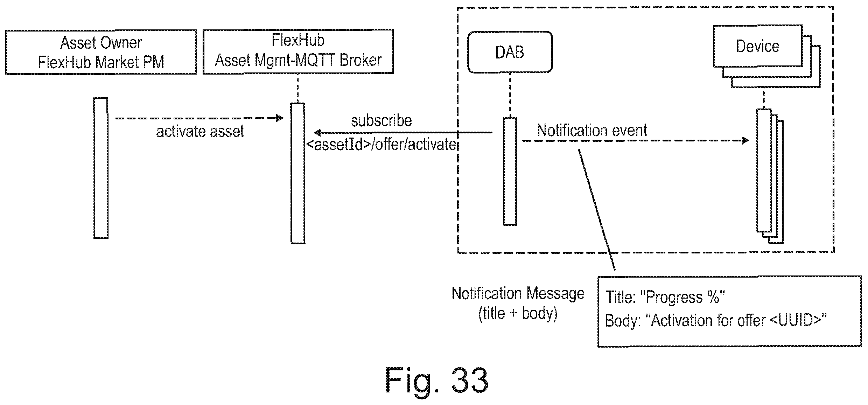

After signing the requested messages, devices return them to the DAB Service with enough information for it to determine which flow was running for the device sending the signed message. Devices may need to sign other JWTs apart from those pertaining to the use case at hand (one of the DAB stack objectives). Therefore, the Firebase Data Message format allow a fast adaptation for other scenarios. The property "useCase" specifies the DAB use case asking for a signature and, in order to identify the action to trigger on the DAB Service upon submittal, we felt appropriate to include an additional "useCaseAction" property to allow the server to distinguish between additional courses of actions within that particular use case. Figures 32 and 33 show a sequence diagram of this process.

For this integration the property "useCase" is tagged as "ewf", and the "useCaseAction" field was used to denote the specific EWF business flow that originally needed the device's signature.

In order to check the activation chart for a given offer as is fulfilled by a particular asset, Flex WebApp can also be used by Asset Owner and, through the dashboard a user can have access to the list of offers made, and select "data sheet" icon for the offer you wish to have charted.

Devices become part of the EWF network and this may be extended to further practical actions, such as turning on/off a generator, a battery, etc. The same is applicable to other marketplaces beyond flex grid, including Electric Vehicle Charging (EVC) or simple smart meter data monetization.

### Use Case: "Business & Consumer Parking"

This use case uses digital identities (for people, services, and things) to create a full end-to-end experience where automobiles may be paired with services regardless of whether the payment:
1. is made either by the driver (a consumer B2C scenario - using the driver's digital identification and an associated private account within a banking platform);
2. charged to the car itself, whose use is kept on a DLT for later processing (an enterprise B2B scenario - where the car belongs to a third party, e.g., a rental company);

The DAB Service manages and orchestrates flows (and hosting a Corda DLT for use for B2B payments). The vehicle may contains an internal router that runs the DAB Middleware application and a customized version of the DAB App (e.g. a Tablet App). This may be installed at embedded (e.g. iOS or Android-based) dashboard computer.

### Interfaces/Dependencies

A SPOT parking system may be installed at a same location as well as a Corda ledger similar to the "Service Payments" use case.

### Secured by SIM

For signing the transactions, the previously discussed Secured by SIM Approach may be used, consuming the PKI on SIM. The SIMs are added to a USB dongle which was plugged into a processor or other device (e.g. a vehicle). DAB Middleware executes on the device, exposing the DAB Middleware API for signing as previously described.

The SPOT parking system installed at parking infrastructure detects vehicles crossing its gates and operates with the DAB Service by calling an endpoint at a Custom API set (see above). This customization is used by SPOT to POST the license plate and gate information to the DAB Service and in turn expect a return code to indicate if:
On entry: a validated payment was setup and, therefore, the barrier can be opened;
On exit: payment was completed, and the car can exit the park.

### FINN

For managing the B2C scenario FINN (RTM) was used. This specialises in monetizing loT solutions that are built on a commercial-ready platform including toolkits that add IoT payments to smart devices. In summary:
A "product" provides a service and defines various actions for interacting with it, assigning for each a utilization price;
Devices register to use a "product", whose actions are charged to a payment method setup by the device owner, such as a credit card;
Whenever a device triggers a "product" action, a micropayment is registered at the FINN ecosystem.

For FINN, a "product "can be any real system actuating on the real world (which integrate with a FINN IOT SDK for connecting "product" actions with any automated activity) or an abstract entity that stands for an offline service. All usage logic is within SPOT is controlled by a DAB Service component. Configured actions for this "product" include gate ingresses and egresses, respectively charged zero and a parking fee based on the stay duration.

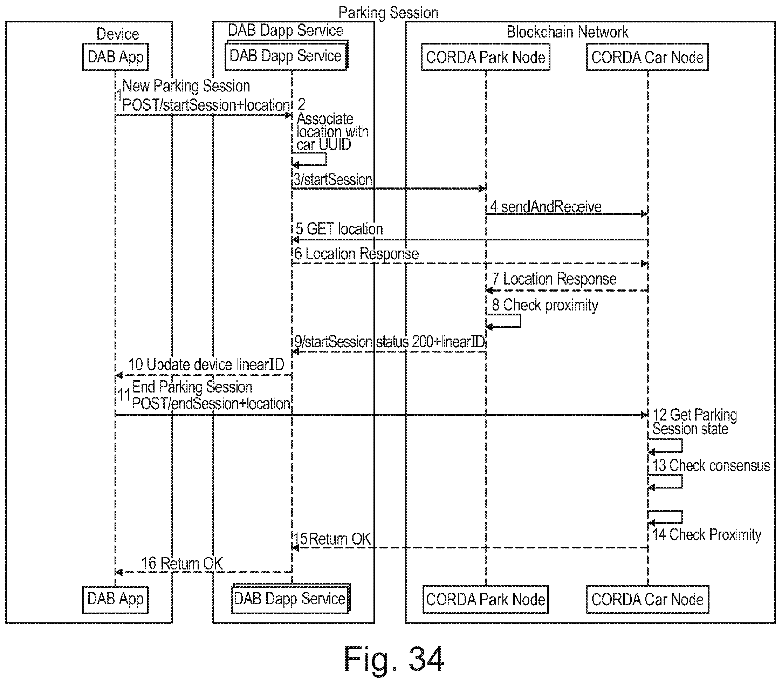

A sequence diagram for a parking session is shown in figure 34.

For triggering these scenarios, a collection of user layouts in the DAB App build transactions following the message format described in the DAB Management Core. For the car parking scenario (useCaseType "parking"), a session start and end are distinguished by the value of their "transactionType" ("newdata" and "endcordasession"), and the content of "transactionObject". This last field carries both purchaser (a car) and supplier (a car park) information to be committed to the DLT. Along with geographical information the DAB Service acts as a proxy server for each device (and used to verify device location when needed).

To begin a simulated parking session, the user selects on the DAB App the menu entry "New Monetizable Data, : tab "Parking, : and fills out the fields:
Initiator - Device starting the parking session (automatically filled with the device's SIM ID);
Target - Corda node where the vehicle is register;
Target UUID - Corda identifier (UUID) of the initiator vehicle;
Source UUID - Corda identifier (UUID) of the parking slot chosen for parking the vehicle;
GPS Option:
   MOCK_HAPPY_PATH - Starts a parking session using a GPS location: always results in a successful action;
   REAL_GPS - Starts a parking session using the real GPS location, as read from the Android OS. If using this option to start a successful parking session, the initiator device and the parking slot should be at a maximum of 6m of each other;

To end a parking session, the user selects an open session in the "Transactions" menu entry, and fills out the fields:
Minutes/Value units that will be charged on the blockchain;

### GPS Option:

MOCK_HAPPY_PATH - Stops the parking session using a GPS location; this results in a successful action;
REAL_GPS - Ends the parking session using the real GPS location of the device;
MOCK_END_SESSION_CAR_STILL_PARKE D - a test flag that instructs the Corda DApp to act as if the car has not left the parking spot.

### Business Logic

For this use case, the device using the "product" is the vehicle. However, its "actions" may be activated in B2C scenarios. Therefore, the concept of "Smart Services" has been used and is an association between users' digital identities and services provided by a DAB stack.

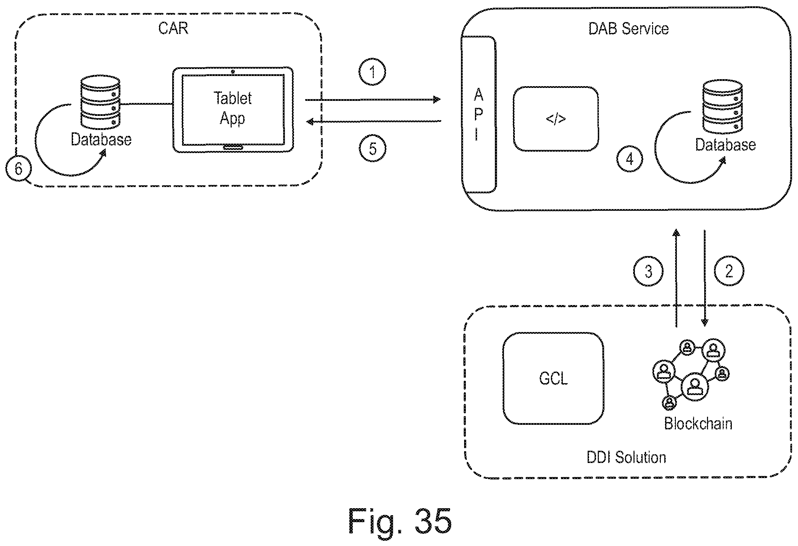

DAB associates the device (car) with the SIM: Since this is a FINN-based Smart Service, the DAB Service needs to know all FINN data associated with the SPOT Parking "product" in order to pass it along to devices wanting to use it. This is done whenever the vehicle Tablet App (or other processor within the vehicle or device) starts up: installed alongside it is a FINN-provided app (embedding a FINN IOT SDK) that contains code to automatically set up that vehicle to be registered at the FINN Core backend and be ready to use the SPOT Parking "product" whenever required). This provisioning flow is shown in figure 35 and includes:

| Step | Description | Trigger |
|---|---|---|
| 1 | Manufacturer adds a new car to the SCB-DAB system | Manufacturer |
| 2 | DAB will deploy a new smart contract for that car identity in the DDI blockchain network | DAB |
| 3 | The DDI blockchain network will respond with the corresponding did | DDI Blockchain |
| 4 | DAB will associate that did with the car license plate | DAB |
| 5 | DAB will send the car's did to the corresponding car | DAB |
| 6 | The car will store its did in its database | Car |

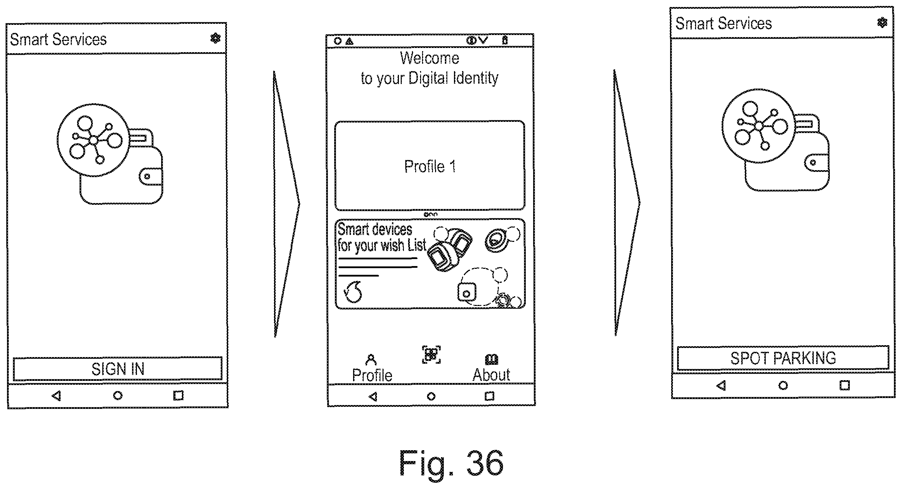

Smart Service Onboarding: Whenever a user wishes to conduct a "Smart Service" onboarding, he does it using a specially developed Android application (henceforth known as "Smart Services App"). The app cooperates with a DID application for selecting a digital identity and associate with it a Smart Service chosen from its UI. This is shown schematically in figure 36.

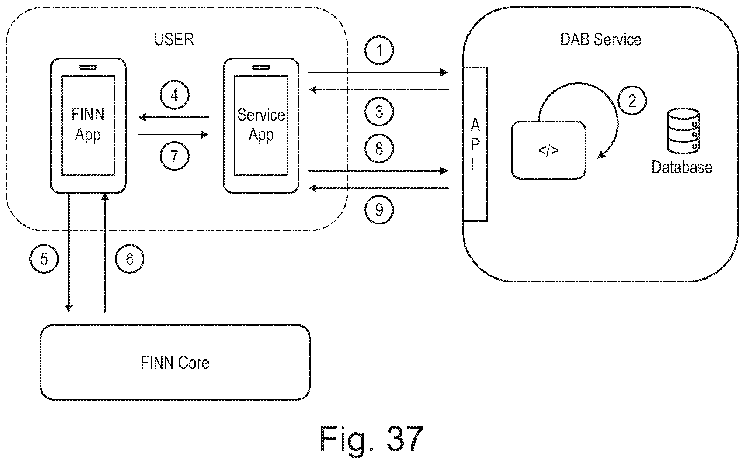

At this point, if a user onboarded for using the "SPOT Parking Smart Service", the DAB Service will have responded with enough data (the data sent at start by the Tablet app) for configuring user-side FINN payment methods, and, for this, the Smart Services app automatically communicates via intents with another FINN-supplied application (embedding the FINN Mobile SDK) that first asks the user for a valid paying credit card and then registers it as a consumer of the SPOT Parking product. This is shown schematically in figure 37. The following steps may be taken in this example implementation.

### B2C Service Onboarding (figure 37)

| Step | Description | Trigger |
|---|---|---|
| 1 | Smart Services app triggers the DAB to create a new service for user | Smart Services App |
| 2 | DAB checks profile type (this case if Personal) and stores user data | DAB |
| 3 | DAB responds with data needed for User side initialization: user profile data + service data | DAB |
| 4 | Smart Service app triggers the Finn Mobile App to create a new service (via intents) | Smart Services App |
| 5 | Finn Mobile app forwards request to FINN Core | FINN Mobile Application |
| 6 | The FINN Core responds with a success or error message | FINN Core |
| 7 | Finn Mobile app responds with a success or error message (via intent return) | FINN Mobile Application |
| 9 | Smart Services app POSTs Finn onboarding confirmation to /services/confirmation | Smart Services App |

Identify the device (e.g. car): In order to determine which car a user will be driving (and understand vehicle will trigger the FINN SPOT Parking "product" actions), a login mechanism is established at the DAB platform that leverages on Digital Identity capabilities to create sessions between users and things: in this way, whenever a car crosses an ingress gate, the DAB Service will know who is driving it. This flow is triggered when a driver inputs the car's license plate on the DAB App (pre-installed on the car's onboard tablet) and its subsequent activities can be divided in two phases:

QR Code generation: the DAB App generates a QR Code on the tablet for the driver to scan in order to proceed with the authentication process; and

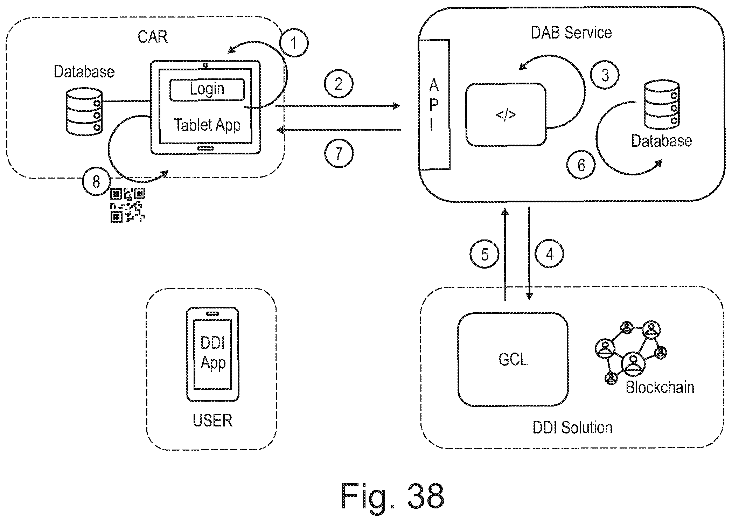

Driver authentication: the driver scans the QR Code triggering the DDI App to open. From there a driver authorises (or not) which personal information they want to share with the vehicle. While some of this data is compulsory, others are optional - this is a design decision configured in the DAB (which acts as a proxy for all vehicles). All authorized information shared by the user may be stored in the DAB. This is shown schematically in figure 38.

### Driver-Car Login through QR Code (figure 38)

| Step | Description | Trigger |
|---|---|---|
| 1 | Driver inputs license plate in the car tablet app | Tablet App |
| 2 | Tablet App sends a login request to the DAB | Tablet App |
| 3 | DAB generates a random topic UUID that identifies that login "session" | DAB |
| 4 | DAB request a nonce + authorization ID to the GCL | DAB |
| 5 | GCL response: nonce + authID | GCL |
| 6 | DAB associates the topic with nonce + authID + step 2 data | DAB |
| 7 | DAB sends to the Tablet App data it needs to generate QR code | DAB |
| 8 | Tablet App generates QR Code for authentication | Tablet App |

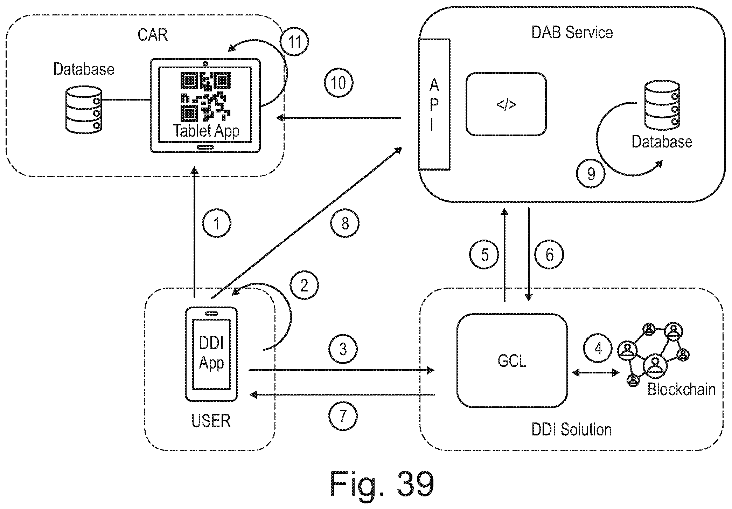

### Driver-Car Login through Decentralized Digital ID (DDI) (figure 39)

| Step | Description | Trigger |
|---|---|---|
| 1 | The driver reads the QR Code with his phone (contains topic + car DID identity) | Driver |
| 2 | The DDI App will open and the driver will select and/or authorize the data he wants to share about himself | DDI App |
| 3 | The DDI App shares that information with the | GCL |
| 4 | The GCL will ask the blockchain for the DAB returnURL stored in the provided car identity | GCL |
| 5 | The GCL POSTs that endpoint, checking for topic existence. If topic exists, then DAB stores the indicated userDid pertaining to the user attempting to login. | GCL |
| 6 | DAB sends an Ok or error response to the GCL | DAB |
| 7 | GCL sends the login result to the DDI APP | GCL |
| 8 | Once the login result is successful, the DDI App POSTs the user profile + profile type to the DAB | DDI App |
| 9 | The DAB stores the user profile + profile type for this user/car session | DAB |
| 10 | The DAB sends the login result to the Tablet App | DAB |
| 11 | The Tablet App displays a success message | Tablet App |

DAB service: The DAB Service is triggered every time SPOT POSTs information on detected vehicle license plates to a custom REST endpoint at the Custom API (implemented in accordance with specifications of the pre-existing SPOT infrastructure). The ensuing logic required an additional component to be integrated within the DAB Core to manage the SPOT business flow, which can be summarised:
when a vehicle enters the car park:
   if the Smart Service was onboarded with a B2B profile, the DAB Service uses the Corda connector at the Blockchain Integration Layer to open a session for that vehicle on the Corda DLT (mirroring the "Parking & Tolls" use case);
   if the Smart Service was onboarded with a B2C profile, a Firebase message is pushed to the vehicle's Tablet App to trigger a product activation on the Finn backend for the SPOT product identifier.
when a vehicle leaves the car park:
   if the Smart Service was onboarded with a B2B profile, the DAB Service closes the previously opened DLT session for that vehicle;
   if the Smart Service was onboarded with a B2C profile, a Firebase message is pushed to the vehicle's Tablet App to trigger a product deactivation on the Finn backend for the SPOT product identifier.

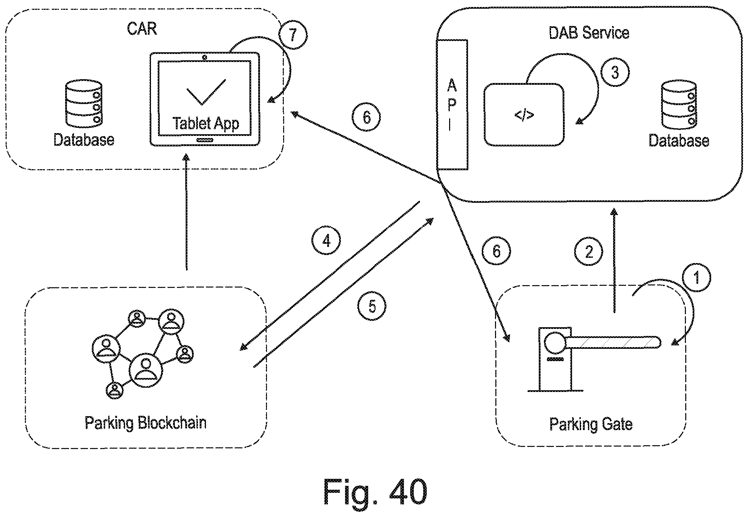

### B2B Start Parking flow detail (figure 40).

| Step | Description | Trigger |
|---|---|---|
| 1 | A camera at an entry gate scans a license plate | Parking Gate |
| 2 | The parking gate request the DAB to start a new parking session for that license plate | Parking Gate |
| 3 | DAB checks user's DID profile type used for onboarding the parking service (this case if Business) | DAB |
| 4 | DAB triggers a new parking session in the Corda parking blockchain | DAB |
| 5 | Response from the blockchain to the DAB - success or error | Parking Blockchain |
| 6 | DAB sends a Firebase notification to the Tablet App notifying about a new parking session and returns step 2 with appropriate message, in turn triggering the gate to open | DAB |
| 7 | Tablet App show information on the screen regarding the new parking session | Tablet App |

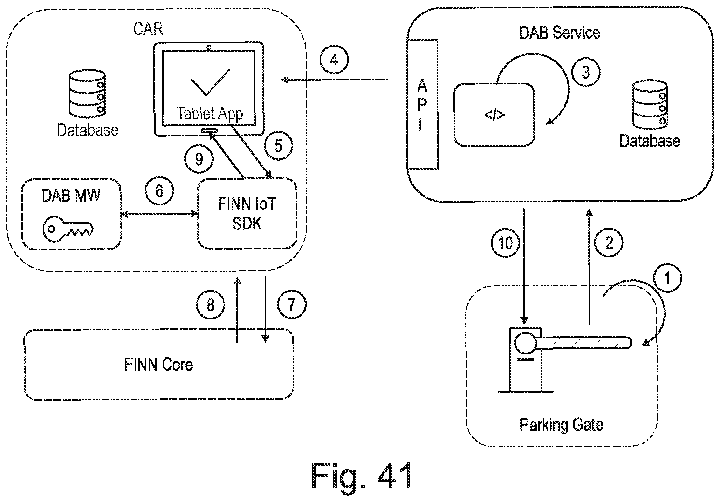

### B2C Start Parking flow detail (figure 41)

| Step | Description | Trigger |
|---|---|---|
| 1 | A camera in the parking gate scans a license plate | Parking Gate |
| 2 | The parking gate request the DAB to start a parking session for that license plate | Parking Gate |
| 3 | DAB checks user's DID profile type used for onboarding the parking service (this case if Personal) | DAB |
| 4 | DAB sends a Firebase notification to the Tablet App, triggering a Finn action (park entry) | DAB |
| 5 | Tablet App triggers to the FINN IoT SDK parking entry action, via intent | Tablet App |
| 6 | FINN IoT SDK uses DAB Middleware to sign the transaction with the corresponding key pair | FINN IoT SDK |
| 7 | FINN IoT SDK triggers a parking entry action in FINN Core | FINN IoT SDK |
| 8 | Response from the FINN Core to FINN IoT SDK - success or error | FINN Core |
| 9 | FINN IoT SDK signals operation result via intent return and Tablet App displays notification popup | FINN IoT SDK |
| 10 | DAB returns from the POST made at step 2, triggering the gate to open | Tablet App |

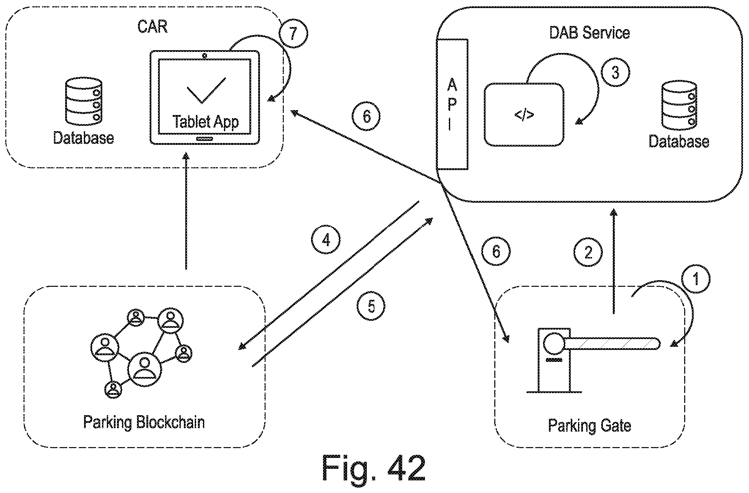

### B2B End Parking flow detail (figure 42).

| Step | Description | Trigger |
|---|---|---|
| 1 | A camera at an exit gate scans a license plate | Parking Gate |
| 2 | Gate requests the DAB to end a parking session for that license plate | Parking Gate |
| 3 | DAB checks user's DID profile type used for onboarding the parking service (this case if Business) | DAB |
| 4 | DAB triggers a parking session close in the Corda | |
| | parking blockchain | DAB |
| 5 | Response from the blockchain to the DAB - success or error | Parking Blockchain |
| 6 | DAB sends a Firebase notification to the Tablet App containing the parking session price and duration, and returns step 2 with appropriate message, in turn triggering the gate to open | DAB |
| 7 | Tablet App show information on the screen regarding the new parking session Tablet App | |

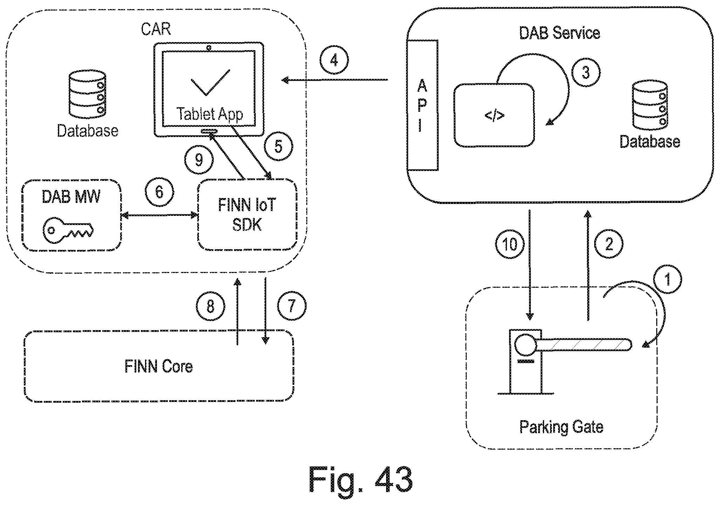

### B2B End Parking flow detail (figure 43)

| Step | Description | Trigger |
|---|---|---|
| 1 | A camera at an exit gate scans a license plate | Parking Gate |
| 2 | Gate requests the DAB to end a parking session for that license plate Parking Gate | |
| 3 | DAB checks user's DID profile type used for onboarding the parking service (this case if Personal) | DAB |
| 4 | DAB sends a Firebase notification to the Tablet App containing the parking session price and duration triggering a Finn action (park exit) | DAB |
| 5 | Tablet App triggers to the FINN IoT SDK parking exit action, via intent | Tablet App |
| 6 | FINN IoT SDK uses DAB Middleware to sign the transaction with the corresponding key pair | FINN IoT SDK |
| 7 | FINN IoT SDK triggers a parking exit action in FINN Core | FINN IoT SDK |
| 8 | Response from the FINN Core to FINN IoT SDK - success or error | FINN Core |
| 9 | FINN IoT SDK signals operation result via intent return and Tablet App displays notification popup | FINN IoT SDK |
| 10 | DAB returns from the POST made at step 2, triggering the gate to open | Tablet App |

A similar solution can be applied to different Parking solutions, and also to different domains in Smart Cities for example, where EV Charging and Tolls could follow the same flows. In terms of Consumer Digital ID and Payments, improvements on the end-to-end experience have been made

### DAB User Interfaces

In the test environment there are two main User Interfaces (UI):
DAB APP: android (or other) mobile application
DAB AEP: Thingworx extension to connect DAB Corda Blockchain

Uls are important to enable customers to make use of all capabilities but also to allow operations and maintenance teams to manage the ecosystem and solution as well as monitoring and extracting information.

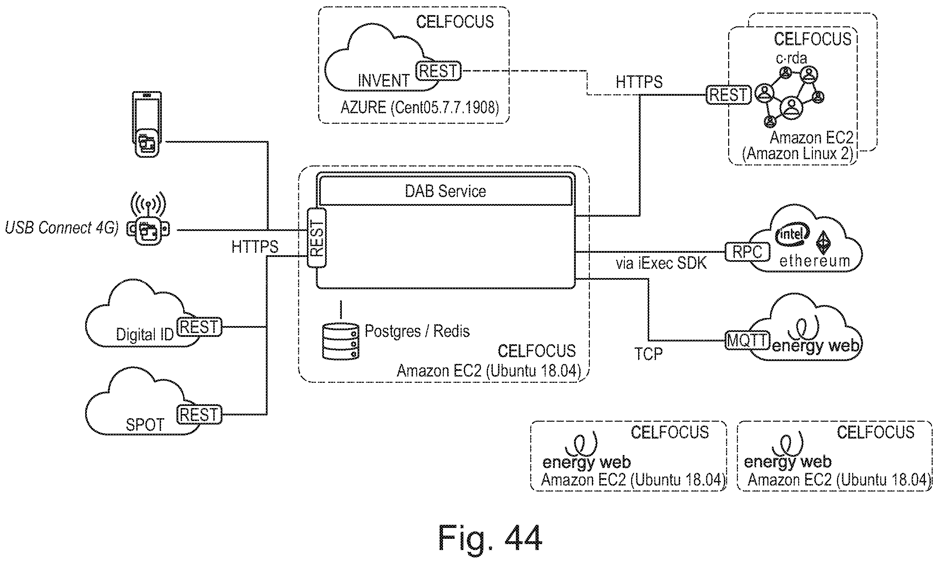

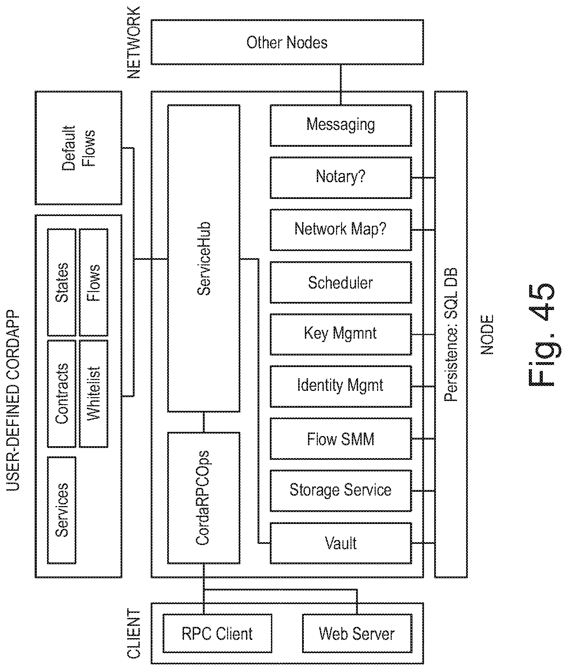

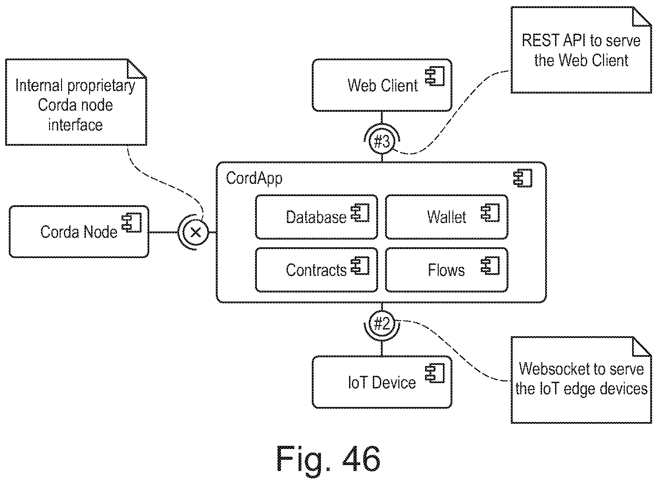

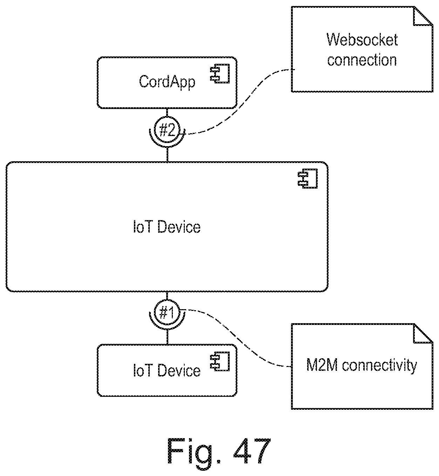

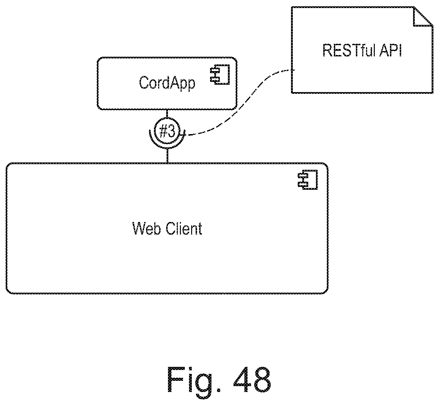

Figures 44 to 48 show example platform environments. Other server types and services may be used.

Although this describes a test scenario, a real parking session may be processed in a similar way but does not require the app. All messages may be initiated from sensors within or around the vehicle (or parking location) and detected events.

As will be appreciated by the skilled person, details of the above embodiment may be varied without departing from the scope of the present invention, as defined by the appended claims.

For example, different distributed ledgers or ledger technology may be used. The UICC may be an embedded SIM, for example. Many different types of devices may be used including mobile, movable, fixed, supervised, unsupervised, domestic, commercial or industrial devices, for example.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A computer-implemented method for generating transactions, the method comprising the steps of:
defining one or more conditions for a transaction;
adding the one or more conditions to blocks within a distributed ledger (150);
generating by a first device (110), an offer for a digital asset, wherein the offer is digitally signed by a secure applet executing within a UICC (120) of the first device (110);
generating by a second device (410), a request for the digital asset, wherein the request is digitally signed by a secure applet executing within a UICC (420) of the second device (410);
authenticating the digital signatures of the offer and of the request;
determining that the offer and request meet the one or more conditions added to the distributed ledger (150); and
if the one or more conditions are met by the offer and the request then:
digitally signing the digital asset by the secure applet executing within the UICC (120) of the first device (110);
transmitting the signed digital asset from the first device (110) to the second device (410);
authenticating the digital signature of the signed digital asset; and
adding to a block on the distributed ledger (150), a transaction recording the transmission of the digital asset from the first device (110) to the second device (410).

2. The method of claim 1, wherein the step of determining if the conditions are met are determined by one or more smart contracts stored within the distributed ledger (150).

3. The method of claim 1 or claim 2, wherein the first device (110), the second device (410) or a separate server adds the block to the distributed ledger (150) recording the transmission of the digital asset from the first device (110) to the second device (410).

4. The method according to any previous claim, wherein the signed digital asset is transmitted directly from the first device (110) to the second device (410) over a secure channel.

5. The method according to any previous claim further comprising the step of recording a transaction of value on the distributed ledger (150) between the second device (410) and the first device (110) in response to the conditions being met.

6. The method according to any previous claim further comprising the step of the first device (110) authenticating the digitally signed request.

7. The method according to any previous claim further comprising the step of exchanging the digital asset for one or more goods or services.

8. The method according to any previous claim further comprising using the digital asset to access a service.

9. The method according to any previous claim, wherein the digital asset includes a package of data.

10. The method of claim 9, wherein the package of data is derived from sensors on the first device (110).

11. A system comprising:
a first device (110) having a UICC (120), the first device (110) configured to generate an offer for a digital asset and transmit the digital asset, the UICC (120) storing in memory a secure applet containing program instructions to cause a processor to:
digitally sign the offer; and
digitally sign the digital asset; and
a second device (410) having a UICC (420), the second device (410) configured to generate a request, receive the digital asset transmitted by the first device (110), and authenticate the digital signature of the digital asset, the UICC (120) storing in memory a secure applet containing program instructions to cause a processor to digitally sign the request; and
a distributed ledger (150) having one or more nodes having one or more processors and memory, the memory containing program instructions to cause the one or more processor to:
add one or more conditions to one or more blocks within a distributed ledger (150);
authenticate the digital signatures of the offer and of the request;
determine that the offer and the request meet the one or more conditions added to the distributed ledger (150); and
allow the digitally signed asset to be transmitted from the first device (110) to the second device (410) when the digitally signed offer and request are determined to meet the one or more conditions.

12. The system of claim 11, wherein the UICCs (120, 420) of the first (110) and second devices (410) further comprise one or more secure storage locations configured to store cryptographic material for use in digitally signing.

13. The system of claim 12 or claim 13, wherein the first device (110) further comprises one or more sensors configured to generate sensor data and further wherein the digital asset is derived from those sensor data.

14. The system according to any of claims 11 to 13 further comprising one or more service providers configured to provide a service in return for the digital asset.

15. The system according to any of claims 11 to 14, wherein the distributed ledger (150) is further configured to store the conditions as one or more smart contracts.

## Patentansprüche

1. Computerimplementiertes Verfahren zur Erzeugung von Transaktionen, wobei das Verfahren die folgenden Schritte umfasst:
Definieren einer oder mehrerer Bedingungen für eine Transaktion;
Hinzufügen der einen oder mehreren Bedingungen zu Blöcken innerhalb eines verteilten Ledgers (150);
Erzeugen eines Angebots für einen digitalen Vermögenswert durch eine erste Vorrichtung (110), wobei das Angebot digital von einem sicheren Applet signiert wird, das innerhalb einer UICC (120) der ersten Vorrichtung (110) ausgeführt wird;
Erzeugen einer Anfrage nach dem digitalen Vermögenswert durch eine zweite Vorrichtung (410), wobei die Anfrage von einem sicheren Applet, das innerhalb einer UICC (420) der zweiten Vorrichtung (410) ausgeführt wird, digital signiert wird;
Authentifizieren der digitalen Signaturen des Angebots und der Anfrage;
Bestimmen, dass das Angebot und die Anfrage die eine oder mehreren zu dem verteilten Ledger (150) hinzugefügten Bedingungen erfüllen; und
wenn die eine oder mehreren Bedingungen durch das Angebot und die Anfrage erfüllt sind, dann:
digitales Signieren des digitalen Vermögenswerts durch das sichere Applet, das innerhalb der UICC (120) der ersten Vorrichtung (110) ausgeführt wird;
Übertragen des signierten digitalen Vermögenswerts von der ersten Vorrichtung (110) zur zweiten Vorrichtung (410);
Authentifizieren der digitalen Signatur des signierten digitalen Vermögenswerts; und
Hinzufügen, zu einem Block im verteilten Ledger (150), einer Transaktion, die die Übertragung des digitalen Vermögenswerts von der ersten Vorrichtung (110) zur zweiten Vorrichtung (410) aufzeichnet.

2. Verfahren nach Anspruch 1, wobei der Schritt des Bestimmens, ob die Bedingungen erfüllt sind, durch einen oder mehrere im verteilten Ledger (150) gespeicherte Smart Contracts bestimmt wird.

3. Verfahren nach Anspruch 1 oder Anspruch 2, wobei die erste Vorrichtung (110), die zweite Vorrichtung (410) oder ein separater Server den Block dem verteilten Ledger (150) hinzufügt, der die Übertragung des digitalen Vermögenswerts von der ersten Vorrichtung (110) zur zweiten Vorrichtung (410) aufzeichnet.

4. Verfahren nach einem vorstehenden Anspruch, wobei der signierte digitale Vermögenswert direkt von der ersten Vorrichtung (110) zur zweiten Vorrichtung (410) über einen sicheren Kanal übertragen wird.

5. Verfahren nach einem vorstehenden Anspruch, ferner umfassend den Schritt des Aufzeichnens einer Werttransaktion auf dem verteilten Ledger (150) zwischen der zweiten Vorrichtung (410) und der ersten Vorrichtung (110) als Reaktion darauf, dass die Bedingungen erfüllt sind.

6. Verfahren nach einem vorstehenden Anspruch, ferner umfassend den Schritt, in dem die erste Vorrichtung (110) die digital signierte Anfrage authentifiziert.

7. Verfahren nach einem vorstehenden Anspruch, ferner umfassend den Schritt des Austauschens des digitalen Vermögenswerts gegen eine oder mehrere Waren oder Dienstleistungen.

8. Verfahren nach einem vorstehenden Anspruch, ferner umfassend Verwenden des digitalen Vermögenswerts zum Zugriff auf eine Dienstleistung.

9. Verfahren nach einem vorstehenden Anspruch, wobei der digitale Vermögenswert ein Datenpaket einschließt.

10. Verfahren nach Anspruch 9, wobei das Datenpaket von Sensoren auf der ersten Vorrichtung (110) abgeleitet wird.

11. System, umfassend:
eine erste Vorrichtung (110), die eine UICC (120) aufweist, wobei die erste Vorrichtung (110) so konfiguriert ist, dass sie ein Angebot für einen digitalen Vermögenswert erzeugt und den digitalen Vermögenswert überträgt, wobei die UICC (120) ein sicheres Applet im Speicher speichert, das Programmanweisungen enthält, die einen Prozessor veranlassen zum:
digitalen Signieren des Angebots; und
digitalen Signieren des digitalen Vermögenswerts; und
eine zweite Vorrichtung (410), die eine UICC (420) aufweist, wobei die zweite Vorrichtung (410) so konfiguriert ist, dass sie eine Anfrage erzeugt, den von der ersten Vorrichtung (110) übertragenen digitalen Vermögenswert empfängt und die digitale Signatur des digitalen Vermögenswerts authentifiziert, wobei die UICC (120) ein sicheres Applet im Speicher speichert, das Programmanweisungen enthält, die einen Prozessor veranlassen, die Anfrage digital zu signieren; und
ein verteilter Ledger (150), der einen oder mehrere Knoten aufweist, die jeweils einen oder mehrere Prozessoren und Speicher aufweisen, wobei der Speicher Programmanweisungen enthält, die den einen oder die mehreren Prozessoren veranlassen zum:
Hinzufügen einer oder mehrerer Bedingungen zu einem oder mehreren Blöcken innerhalb eines verteilten Ledgers (150);
Authentifizieren der digitalen Signaturen des Angebots und der Anfrage;
Bestimmen, dass das Angebot und die Anfrage die eine oder mehreren zu dem verteilten Ledger (150) hinzugefügten Bedingungen erfüllen; und
Ermöglichen, dass der digital signierte Vermögenswert von der ersten Vorrichtung (110) zur zweiten Vorrichtung (410) übertragen wird, wenn bestimmt wird, dass das digital signierte Angebot und die Anfrage die eine oder mehreren Bedingungen erfüllen.

12. System nach Anspruch 11, wobei die UICCs (120, 420) der ersten (110) und zweiten Vorrichtung (410) ferner einen oder mehrere sichere Speicherorte umfassen, die zur Speicherung von kryptografischem Material zur Verwendung beim digitalen Signieren konfiguriert sind.

13. System nach Anspruch 12 oder Anspruch 13, wobei die erste Vorrichtung (110) ferner einen oder mehrere Sensoren umfasst, die so konfiguriert sind, dass sie Sensordaten erzeugen, und wobei ferner der digitale Vermögenswert aus diesen Sensordaten abgeleitet wird.

14. System nach einem der Ansprüche 11 bis 13, ferner umfassend einen oder mehrere Dienstanbieter, die konfiguriert sind, eine Dienstleistung im Austausch gegen den digitalen Vermögenswert bereitzustellen.

15. System nach einem der Ansprüche 11 bis 14, wobei der verteilte Ledger (150) ferner so konfiguriert ist, dass er die Bedingungen als einen oder mehrere Smart Contracts speichert.

## Revendications

1. Procédé mis en œuvre par ordinateur pour générer des transactions, le procédé comprenant les étapes de :
définition d'une ou de plusieurs conditions pour une transaction ;
ajout des une ou plusieurs conditions à des blocs au sein d'un registre distribué (150) ;
génération, par un premier dispositif (110), d'une offre pour un actif numérique, dans lequel l'offre est signée numériquement par un applet sécurisé s'exécutant dans une UICC (120) du premier dispositif (110) ;
génération, par un second dispositif (410), d'une demande pour l'actif numérique, dans lequel la demande est signée numériquement par un applet sécurisé s'exécutant dans une UICC (420) du second dispositif (410) ;
authentification des signatures numériques de l'offre et de la demande ;
détermination pour établissant que l'offre et la demande satisfont aux une ou plusieurs conditions ajoutées au registre distribué (150) ; et
si l'offre et la demande satisfont aux une ou plusieurs conditions, alors :
signature numérique de l'actif numérique par l'applet sécurisé s'exécutant dans l'UICC (120) du premier dispositif (110) ;
transmission de l'actif numérique signé du premier dispositif (110) au second dispositif (410) ;
authentification de la signature numérique de l'actif numérique signé ; et
ajout, à un bloc sur le registre distribué (150), d'une transaction enregistrant la transmission de l'actif numérique du premier dispositif (110) au second dispositif (410).

2. Procédé selon la revendication 1, dans lequel l'étape de détermination établissant si les conditions sont satisfaites est déterminée par un ou plusieurs contrats intelligents stockés au sein du registre distribué (150).

3. Procédé selon la revendication 1 ou la revendication 2, dans lequel le premier dispositif (110), le second dispositif (410) ou un serveur séparé ajoutent le bloc au registre distribué (150) enregistrant la transmission de l'actif numérique du premier dispositif (110) au second dispositif (410).

4. Procédé selon une quelconque revendication précédente, dans lequel l'actif numérique signé est transmis directement du premier dispositif (110) au second dispositif (410) sur un canal sécurisé.

5. Procédé selon une quelconque revendication précédente comprenant en outre l'étape d'enregistrement d'une transaction de valeur sur le registre distribué (150) entre le second dispositif (410) et le premier dispositif (110) en réponse aux conditions qui sont satisfaites.

6. Procédé selon une quelconque revendication précédente comprenant en outre l'étape du premier dispositif (110) authentifiant la demande signée numériquement.

7. Procédé selon une quelconque revendication précédente comprenant en outre l'étape d'échange de l'actif numérique contre un ou plusieurs biens ou services.

8. Procédé selon une quelconque revendication précédente comprenant en outre l'utilisation de l'actif numérique pour accéder à un service.

9. Procédé selon une quelconque revendication précédente, dans lequel l'actif numérique inclut un ensemble de données.

10. Procédé selon la revendication 9, dans lequel l'ensemble de données provient de capteurs sur le premier dispositif (110).

11. Système comprenant :
un premier dispositif (110) présentant une UICC (120), le premier dispositif (110) étant configuré pour générer une offre pour un actif numérique et transmettre l'actif numérique, l'UICC (120) stockant en mémoire un applet sécurisé contenant des instructions de programme pour amener un processeur à :
signer numériquement l'offre ; et
signer numériquement l'actif numérique ; et
un second dispositif (410) présentant une UICC (420), le second dispositif (410) étant configuré pour générer une demande, recevoir l'actif numérique transmis par le premier dispositif (110) et authentifier la signature numérique de l'actif numérique, l'UICC (120) stockant en mémoire un applet sécurisé contenant des instructions de programme pour amener un processeur à signer numériquement la demande ; et
un registre distribué (150) présentant un ou plusieurs nœuds présentant un ou plusieurs processeurs et une mémoire, la mémoire contenant des instructions de programme pour amener les un ou plusieurs processeurs à :
ajouter une ou plusieurs conditions à un ou plusieurs blocs au sein d'un registre distribué (150) ;
authentifier les signatures numériques de l'offre et de la demande ;
déterminer que l'offre et la demande satisfont aux une ou plusieurs conditions ajoutées au registre distribué (150) ; et
permettre la transmission de l'actif signé numériquement du premier dispositif (110) au second dispositif (410) lorsqu'il est déterminé que l'offre et la demande signées numériquement satisfont aux une ou plusieurs conditions.

12. Système selon la revendication 11, dans lequel les UICC (120, 420) des premier (110) et second (410) dispositifs comprennent en outre un ou plusieurs emplacements de stockage sécurisés configurés pour stocker du matériel cryptographique pour une utilisation dans la signature numérique.

13. Système selon la revendication 12 ou la revendication 13, dans lequel le premier dispositif (110) comprend en outre un ou plusieurs capteurs configurés pour générer des données de capteur et en outre dans lequel l'actif numérique provient de ces données de capteur.

14. Système selon l'une quelconque des revendications 11 à 13 comprenant en outre un ou plusieurs fournisseurs de services configurés pour fournir un service en échange de l'actif numérique.

15. Système selon l'une quelconque des revendications 11 à 14, dans lequel le registre distribué (150) est en outre configuré pour stocker les conditions sous forme d'un ou de plusieurs contrats intelligents.
